# EUROPEAN PATENT APPLICATION

(11) **EP 4 640 502 A1**
(43) Date of publication of application: **29.10.2025**
(21) Application number: 25171717.9
(22) Date of filing: 22.04.2025
(51) Int. Cl.: B60T 1/06, B60T 13/74, B60T 17/22, F16D 55/226, F16D 65/16, F16D 65/18

(54) **ELECTRO-MECHANICAL BRAKE APPARATUS AND VEHICLE**

(30) Priority: 22.04.2024 CN 202410487214
(71) Applicant: Huawei Digital Power Technologies Co., Ltd., Shenzhen, Guangdong 518043 (CN)
(72) Inventor: LUO, Yuehao, Shenzhen, 518043 (CN); HE, Yuhui, Shenzhen, 518043 (CN)
(74) Representative: Isarpatent

(57) **Abstract**

This application provides an electro-mechanical brake apparatus (100) and a vehicle. The electro-mechanical brake apparatus (100) includes a brake caliper (30) and a lead screw (41). The brake caliper (30) is configured to be fastened to a brake motor (50) and accommodate the lead screw (41). The lead screw (41) is configured to be connected to the brake motor (50) in a transmission manner and drive two friction plates (21). The brake caliper (30) includes two mounting surfaces (30a, 30b). Each mounting surface is used for mounting one friction plate (21). Along an axial direction of the lead screw (41), a distance between the other mounting surface (30a, 30b) and the lead screw (41) is greater than a distance between one mounting surface (30a, 30b) and the lead screw (41). The lead screw (41) includes two end faces (41a, 41b). A distance between one end face (41a,41b) and any mounting surface (30a, 30b) is greater than a distance between the other end face (41a, 41b) and the any mounting surface (30a, 30b). At least one of the one end face (41a, 41b) or the other mounting surface (30a, 30b) includes an accommodation groove (35). Each accommodation groove (35) is configured to accommodate a part of a pressure sensor (71a). Each pressure sensor (71a) is configured to detect pressure against one friction plate (21) during braking.

## Description

### TECHNICAL FIELD

This application relates to the field of vehicle technologies, and in particular, to an electro-mechanical brake apparatus and a vehicle.

### BACKGROUND

An electro-mechanical brake (electro-mechanical brake, EMB) apparatus drives, through cooperation between a motor and a mechanical feed mechanism, a brake to perform braking. The electro-mechanical brake apparatus is characterized by a simple structure, sensitive response, stable load transmission, no hydraulic pipe, and the like, and has high transmission efficiency. In addition, the electro-mechanical brake apparatus further tends to develop toward miniaturization, to adapt to wheel space of a vehicle.

### SUMMARY

This application provides an electro-mechanical brake apparatus and a vehicle. A pressure sensor is partially accommodated in an accommodation groove to reduce an axial size of the electro-mechanical brake apparatus.

According to a first aspect, this application provides an electro-mechanical brake apparatus. The electro-mechanical brake apparatus includes a brake caliper and a lead screw. The brake caliper is configured to be fastened to a brake motor and accommodate the lead screw. The lead screw is configured to be connected to the brake motor in a transmission manner and drive two friction plates. The brake caliper includes two mounting surfaces. Each mounting surface is used for mounting one friction plate. Along an axial direction of the lead screw, a distance between the other mounting surface and the lead screw is greater than a distance between one mounting surface and the lead screw.

The lead screw includes two end faces. A distance between one end face and any mounting surface is greater than a distance between the other end face and the any mounting surface.

At least one of the one end face or the other mounting surface includes an accommodation groove. Each accommodation groove is configured to accommodate a part of a pressure sensor. Each pressure sensor is configured to detect pressure against one friction plate during braking.

In the electro-mechanical brake apparatus provided in this application, one friction plate is mounted on each of the two opposite mounting surfaces of the brake caliper, and the brake motor drives, through the lead screw, the two friction plates to move close to or away from each other, to abut against or release a brake disc. In the electro-mechanical brake apparatus, one pressure sensor further detects pressure against one friction plate during braking, and an output torque of the brake motor is adjusted based on a detection signal of the pressure sensor to ensure reliable braking.

In the electro-mechanical brake apparatus provided in this application, one pressure sensor is further partially accommodated in one accommodation groove, where the accommodation groove is located at a remote end of the brake caliper relative to the brake motor or located at a near end of the lead screw facing the brake motor. When the accommodation groove is located at the remote end of the brake caliper, an axial size at a near end of the brake caliper relative to the brake motor can be reduced. When the accommodation groove is located at the near end of the lead screw, an axial size at a near end of the brake caliper relative to the brake motor can also be reduced. In this way, an axial size, on a side close to the brake motor, of the electro-mechanical brake apparatus provided in this application is reduced, so that the electro-mechanical brake apparatus can adapt to wheel space.

In an implementation, the one end face includes one accommodation groove, and the other mounting surface includes another accommodation groove. The one accommodation groove on the one end face is configured to accommodate one pressure sensor, and the one pressure sensor is configured to detect pressure against one friction plate during braking.

The another accommodation groove on the other mounting surface is configured to accommodate another pressure sensor, and the another pressure sensor is configured to detect pressure against the other friction plate during braking.

A measurement scale of the one pressure sensor is greater than a measurement scale of the another pressure sensor.

In this implementation, the electro-mechanical brake apparatus includes two pressure sensors. The two pressure sensors are respectively located in the one accommodation groove and the another accommodation groove, and respectively detect pressure against the two friction plates during braking. The measurement scales of the two pressure sensors are set differently. A pressure sensor with a smaller measurement scale is suitable for detecting a high-precision item, for example, performing zero point detection on a braking force, to improve braking precision. A pressure sensor with a larger measurement scale is suitable for detecting a braking force during an entire braking stroke, to ensure reliable braking.

In an implementation, the other mounting surface includes two accommodation grooves. The two accommodation grooves are respectively configured to accommodate two pressure sensors. Measurement scales of the two pressure sensors are both less than the measurement scale of the one pressure sensor accommodated in the one accommodation groove on the one end face. Along an arrangement direction of the two accommodation grooves on the other mounting surface, a spacing between the two accommodation grooves is greater than an outer diameter of the lead screw and is less than a length of the other friction plate.

In this implementation, the two pressure sensors with small measurement scales are disposed at the remote end of the brake caliper relative to the brake motor, to perform joint detection to further improve detection precision. Along a radial direction of the lead screw, the two pressure sensors with small measurement scales are respectively arranged on two sides of the lead screw, to eliminate a possible deviation of detection data caused by a force applied to a single side of the other friction plate.

In an implementation, the other friction plate, the one friction plate, the lead screw, and the brake motor are sequentially arranged along the axial direction of the lead screw.

In an implementation, the other mounting surface, the one mounting surface, the lead screw, and the brake motor are sequentially arranged along the axial direction of the lead screw. In an implementation, the one end face includes one accommodation groove, and the brake caliper is further configured to accommodate another part of the one pressure sensor. Along the radial direction of the lead screw, an inner diameter of a groove opening of the one accommodation groove is greater than an inner diameter of the one pressure sensor.

In this implementation, the brake caliper is configured to accommodate both the lead screw and the one pressure sensor, and the one pressure sensor further partially extends into the one accommodation groove of the lead screw. To be specific, a part of the one pressure sensor, the lead screw, and the brake caliper are sequentially arranged in a sleeved manner along the radial direction of the lead screw, to reduce the axial size of the brake caliper.

In an implementation, the one accommodation groove is further configured to accommodate a thrust bearing. Along the axial direction of the lead screw, the thrust bearing is arranged between a groove bottom of the one accommodation groove and the one pressure sensor. Along the radial direction of the lead screw, an inner diameter of the one accommodation groove is greater than an outer diameter of the thrust bearing, and the outer diameter of the thrust bearing is greater than the inner diameter of the one pressure sensor.

In this implementation, the thrust bearing is configured to bear reverse thrust applied by the one friction plate to the lead screw. One side of the thrust bearing is configured to rotate along with the lead screw in the brake caliper, and the other side of the thrust bearing is stationary relative to the one pressure sensor. The thrust bearing is configured to reduce friction between the lead screw and the one pressure sensor to avoid friction loss.

In an implementation, along the axial direction of the lead screw, a length of the one accommodation groove is less than a sum of a length of the thrust bearing and a length of the one pressure sensor.

In this implementation, the thrust bearing and the one pressure sensor are arranged in a press-fitting manner along the axial direction of the lead screw, and the one pressure sensor at least partially extends out of the one accommodation groove along the axial direction of the lead screw, to abut against the brake caliper. In an implementation, the brake caliper is further configured to accommodate a swivel nut. The lead screw is configured to drive the swivel nut to move along the axial direction of the lead screw. A spiral groove of the lead screw is configured to be meshed with a spiral groove of the swivel nut. Along the axial direction of the lead screw, the length of the one accommodation groove is less than a length of the spiral groove of the lead screw, and a sum of the length of the spiral groove of the lead screw and the length of the one accommodation groove is greater than a length of the lead screw.

Along the radial direction of the lead screw, the outer diameter of the lead screw is greater than an outer diameter of the one pressure sensor.

In this implementation, a spiral groove on an inner circumferential surface of the swivel nut is meshed with a spiral groove on an outer circumferential surface of the lead screw, to convert rotational movement of the lead screw driven by the brake motor into displacement along the axial direction of the lead screw, so that the swivel nut can drive the one friction plate to slide along the axial direction of the lead screw. Along the axial direction of the lead screw, the spiral groove of the lead screw at least partially overlaps the one accommodation groove. On the one hand, this ensures a length of meshing between the lead screw and the swivel nut, to reliably transmit a braking force. On the other hand, the one pressure sensor is at least partially accommodated in the one accommodation groove, so that the axial size of the brake caliper is reduced. In an implementation, the electro-mechanical brake apparatus includes a transmission shaft, and the transmission shaft is configured to receive driving by a motor shaft of the brake motor. The groove bottom of the one accommodation groove is configured to be fastened to the transmission shaft. Alternatively, the groove bottom of the one accommodation groove includes an inner spline, and the inner spline is configured to be coupled to an outer spline of the transmission shaft.

In this implementation, the transmission shaft is configured to connect the brake motor to the lead screw in a transmission manner. The transmission shaft is connected to the lead screw in a transmission manner at the groove bottom of the one accommodation groove. The transmission shaft is also partially accommodated in the one accommodation groove, to reduce the axial size of the electro-mechanical brake apparatus.

In an implementation, the one pressure sensor is configured to be sleeved on an outer circumferential surface of the transmission shaft along the radial direction of the lead screw and abut against the outer circumferential surface of the transmission shaft.

In this implementation, the one pressure sensor implements radial positioning by abutting against the outer circumferential surface of the transmission shaft, to avoid displacement of the one pressure sensor in a groove along the radial direction of the lead screw, and ensure detection precision of the one pressure sensor.

In an implementation, the brake caliper includes the groove and a through hole. The groove is configured to accommodate the lead screw, the swivel nut, and the one pressure sensor. The through hole penetrates a groove bottom of the groove along the axial direction of the lead screw. The through hole is configured to allow the transmission shaft to pass. Along the radial direction of the lead screw, a hole diameter of the through hole is greater than or equal to an outer diameter of the transmission shaft and is less than the outer diameter of the one pressure sensor.

In this implementation, the lead screw is accommodated in the groove on the one mounting surface of the brake caliper, a groove opening of the groove is away from the brake motor along the axial direction of the lead screw, and the transmission shaft is configured to connect the lead screw to the brake motor in a transmission manner through the through hole. The hole diameter of the through hole is less than the outer diameter of the one pressure sensor, and the one pressure sensor may abut against the groove bottom of the groove. In an implementation, along the axial direction of the lead screw, one side of the one pressure sensor directly abuts against the groove bottom of the groove, and the other side of the one pressure sensor abuts against the groove bottom of the one accommodation groove through the thrust bearing.

In this implementation, two sides of the one pressure sensor respectively abut against the thrust bearing and the groove bottom of the groove, to detect pressure against the one friction plate during braking.

In an implementation, the one pressure sensor includes an axial protrusion, and the axial protrusion is embedded into the groove bottom of the groove along the axial direction of the lead screw.

In this implementation, the one pressure sensor abuts against the groove bottom of the groove, and further forms the axial protrusion embedded into the groove bottom of the groove. The axial protrusion may be configured to accommodate an internal component of the one pressure sensor, and is embedded into the groove bottom of the groove to reduce the axial size of the brake caliper.

In an implementation, the groove includes two connected sections along the axial direction of the lead screw, and a distance between one section and any mounting surface is greater than a distance between the other section and the any mounting surface. Along the radial direction of the lead screw, a diameter of the other section is less than a diameter of the outer circumferential surface of the lead screw and is greater than the outer diameter of the one pressure sensor.

In this implementation, the outer diameter of the lead screw is greater than the outer diameter of the one pressure sensor, and an inner diameter size of an end, close to the one pressure sensor, of the groove is reduced, so that structural strength of the brake caliper can be improved, and a radial size of the other section of the groove is reduced.

In an implementation, the other mounting surface further includes another accommodation groove. The another accommodation groove is configured to accommodate another pressure sensor and one end of a slider. The other end of the slider is configured to fasten the other friction plate. The another pressure sensor is arranged between the slider and a groove bottom of the another accommodation groove.

In this implementation, the other mounting surface located at the remote end of the brake motor includes the another accommodation groove, and the another pressure sensor is partially accommodated in the another accommodation groove. The another pressure sensor is arranged on a side, away from the brake motor, of the brake disc, so that an axial size, on a side close to the brake motor, of the brake caliper can be reduced, to properly utilize wheel space of a vehicle.

In an implementation, the groove bottom of the another accommodation groove includes a protrusion. The protrusion extends from the groove bottom of the another accommodation groove toward a groove opening. An outer diameter of the protrusion is less than or equal to an inner diameter of the another pressure sensor.

In this implementation, the another pressure sensor may be sleeved on the protrusion in the another accommodation groove, to facilitate mounting of the another pressure sensor in the another accommodation groove.

In an implementation, the another pressure sensor is sleeved on the protrusion, one side of the another pressure sensor directly abuts against the groove bottom of the another accommodation groove, and the other side of the another pressure sensor directly abuts against the one end of the slider.

In this implementation, the another pressure sensor implements radial positioning by abutting against an outer circumferential surface of the protrusion, to avoid displacement of the another pressure sensor in the another accommodation groove along the radial direction of the lead screw, and ensure detection precision of the another pressure sensor. In an implementation, a length of the protrusion is less than or equal to a thickness of the another pressure sensor.

In this implementation, the protrusion is concave toward the groove bottom of the another accommodation groove relative to the another pressure sensor, to prevent the protrusion from abutting against the other friction plate and affecting pressure detection of the another pressure sensor.

In an implementation, the another pressure sensor includes another axial protrusion, and the another axial protrusion is embedded into the groove bottom of the another accommodation groove along the axial direction of the lead screw.

In this implementation, the another pressure sensor abuts against the groove bottom of the another accommodation groove, and further forms the axial protrusion embedded into the groove bottom of the another accommodation groove. The axial protrusion may be configured to accommodate an internal component of the another pressure sensor, and is embedded into the groove bottom of the another accommodation groove to reduce the axial size of the brake caliper.

According to a second aspect, this application provides an electro-mechanical brake apparatus including two pressure sensors with different measurement scales. The electro-mechanical brake apparatus is configured to drive at least one friction plate to clamp a brake disc. The electro-mechanical brake apparatus includes a brake caliper and two pressure sensors with different measurement scales. The brake caliper includes at least one caliper body, and the at least one caliper body is configured to mount two types of pressure sensors and the at least one friction plate. A first-type pressure sensor is configured to detect, during zero point detection, pressure applied to the at least one friction plate. A second-type pressure sensor is configured to detect, during braking, pressure applied by the at least one friction plate to the brake disc.

A measurement scale of the first-type pressure sensor is less than a measurement scale of the second-type pressure sensor. The zero point detection process is used to determine a preset pressure value. The preset pressure value indicates that pressure applied by the electro-mechanical brake apparatus to the at least one friction plate during breaking is greater than zero.

In the electro-mechanical brake apparatus in this application, the two types of pressure sensors with different measurement scales mainly operate in different stages. The first-type pressure sensor has a small measurement scale, and the first-type pressure sensor is suitable for more accurately detecting pressure against one friction plate during zero point detection. The second-type pressure sensor has a larger measurement scale, and the second-type pressure sensor is suitable for detecting pressure applied by the friction plate to the brake disc during entire braking.

In the electro-mechanical brake apparatus in this application, the two types of pressure sensors with different measurement scales operate cooperatively, so that both detection precision during zero point detection and a detection scale during entire braking can be considered, to improve braking force control precision of the electro-mechanical brake apparatus.

In an implementation, one of the at least one caliper body is configured to mount one friction plate and accommodate at least one first-type pressure sensor. Along an axial direction of the brake disc, the at least one first-type pressure sensor is arranged on a side, away from the brake disc, of the friction plate. The at least one first-type pressure sensor is configured to detect pressure applied to the friction plate.

In this implementation, the at least one first-type pressure sensor is mounted in the caliper body, and correspondingly detects pressure against the friction plate mounted in the same caliper body during braking, to implement a zero point detection function.

In an implementation, the caliper body is further configured to accommodate at least one elastic component, and each elastic component is configured to buffer reverse pressure applied by the friction plate to one first-type pressure sensor. Along the axial direction of the brake disc, one elastic component is arranged in a press-fitting manner on a side, facing the caliper body or the friction plate, of one first-type pressure sensor.

In this implementation, one elastic component is disposed on one side of each first-type pressure sensor along the axial direction of the brake disc, to buffer reverse pressure applied by the friction plate to the first-type pressure sensor during braking, and avoid possible damage caused by excessively large reverse pressure of the friction plate to the first-type pressure sensor.

In an implementation, the caliper body includes an accommodation groove and a slider, and the accommodation groove is configured to accommodate one first-type pressure sensor. The slider is arranged between the first-type pressure sensor and the friction plate along the axial direction of the brake disc. A groove opening of the accommodation groove faces the friction plate and is configured to accommodate a part of the slider. The friction plate is configured to be fastened to another part of the slider.

In this implementation, the first-type pressure sensor is accommodated and fastened in the accommodation groove on the caliper body, and the slider is arranged between the first-type pressure sensor and the friction plate along the axial direction of the brake disc. The slider is configured to slide in the accommodation groove and press against the first-type pressure sensor to transmit, to the first-type pressure sensor, pressure applied by the friction plate to the brake disc.

In an implementation, the accommodation groove includes a first section and a second section that are connected. Along the axial direction of the brake disc, the first section is arranged on a side, away from the friction plate, of the second section. The first section is configured to accommodate one first-type pressure sensor.

Along a radial direction of the brake disc, a size of the first section is less than a size of the second section and is less than a maximum width of the slider.

In this implementation, the size of the first section of the accommodation groove is less than the size of the second section, and the slider may slide in the second section and drive the friction plate. Along the axial direction of the brake disc, an abutting surface facing the friction plate is formed at a junction between the first section and the second section. The abutting surface may be configured to limit displacement of the slider toward the first section, to protect the first-type pressure sensor.

In an implementation, the accommodation groove is further configured to at least partially accommodate one elastic component. Along the axial direction of the brake disc, a length of the accommodation groove is less than a sum of a length of the first-type pressure sensor and a natural length of the elastic component.

In this implementation, in a state in which the elastic component is not pressed, the first-type pressure sensor and the elastic component that are arranged in a press-fitting manner may extend out of the first section of the accommodation groove, to ensure that the first-type pressure sensor is in reliable contact with the slider and detects pressure against the friction plate. In a state in which the slider applies pressure to the elastic component, the first-type pressure sensor may retract into the first section through compression of the elastic component, to avoid higher pressure on the first-type pressure sensor.

In an implementation, the electro-mechanical brake apparatus includes two first-type pressure sensors, and the two first-type pressure sensors are mounted in the same caliper body. The two first-type pressure sensors are arranged between the caliper body and the friction plate along the axial direction of the brake disc.

Along the radial direction of the brake disc, a spacing between the two first-type pressure sensors is greater than an outer diameter of either of the first-type pressure sensors. In an embodiment, the two first-type pressure sensors are symmetrically distributed around a center of the friction plate.

In this implementation, the two first-type pressure sensors are respectively arranged on two sides of the center of the friction plate along the radial direction of the brake disc, to eliminate a possible deviation of detection data caused by a force applied to a single side of the friction plate.

In an implementation, one of the at least one caliper body is configured to mount one friction plate and accommodate one second-type pressure sensor. Along the axial direction of the brake disc, the second-type pressure sensor is arranged on a side, away from the brake disc, of the friction plate. The second-type pressure sensor is configured to detect pressure applied by the friction plate to one side of the brake disc.

In this implementation, the second-type pressure sensor is mounted in the caliper body, and correspondingly detects pressure against the friction plate mounted in the same caliper body during braking, to implement a pressure detection function during braking.

In an implementation, the electro-mechanical brake apparatus includes a lead screw, the caliper body is configured to accommodate the lead screw and the second-type pressure sensor, and the lead screw is configured to drive the friction plate. The lead screw is arranged between the friction plate and the second-type pressure sensor along the axial direction of the brake disc.

In this implementation, the lead screw is arranged between the second-type pressure sensor and the friction plate along the axial direction of the brake disc, the lead screw is configured to drive the friction plate to slide, and the lead screw is configured to transmit, to the second-type pressure sensor, pressure applied by the friction plate to the brake disc.

In an implementation, the caliper body is further configured to accommodate a thrust bearing. The thrust bearing is arranged between the lead screw and the second-type pressure sensor along the axial direction of the brake disc. Along the radial direction of the brake disc, an outer diameter of the thrust bearing is greater than an inner diameter of the second-type pressure sensor, is less than an outer diameter of the lead screw, and is less than an outer diameter of the second-type pressure sensor.

In this implementation, the thrust bearing is configured to bear reverse thrust applied by the one friction plate to the lead screw. One side of the thrust bearing is configured to rotate along with the lead screw in the caliper body, and the other side of the thrust bearing is stationary relative to the second-type pressure sensor. The thrust bearing is configured to reduce friction between the lead screw and the second-type pressure sensor to avoid friction loss.

In an implementation, the electro-mechanical brake apparatus includes a brake motor and a transmission shaft. The caliper body is configured to fasten the brake motor. The transmission shaft is configured to connect the lead screw to the brake motor in a transmission manner. The second-type pressure sensor is arranged between the lead screw and the brake motor along the axial direction of the brake disc.

Along the radial direction of the brake disc, the second-type pressure sensor is sleeved on the transmission shaft.

In this implementation, the caliper body configured to accommodate the second-type pressure sensor is further configured to fasten the brake motor, and the lead screw is configured to receive driving by the brake motor, to drive the friction plate mounted in the same caliper body. The second-type pressure sensor is configured to allow the transmission shaft to pass. The second-type pressure sensor is configured to detect, through the lead screw, reverse pressure formed by the friction plate pressing against the brake disc.

In an implementation, the caliper body includes a groove and a through hole. The groove is configured to accommodate the lead screw and the second-type pressure sensor. The through hole penetrates a groove bottom of the groove along the axial direction of the brake disc. The through hole is configured to allow the transmission shaft to pass. Along the radial direction of the lead screw, a hole diameter of the through hole is greater than or equal to an outer diameter of the transmission shaft and is less than the outer diameter of the second-type pressure sensor.

In this implementation, the lead screw is accommodated in the groove on the caliper body configured to accommodate the second-type pressure sensor, and a groove opening of the groove is away from the brake motor along the axial direction of the brake disc. The transmission shaft is configured to connect the lead screw to the brake motor through the through hole. The hole diameter of the through hole is less than the outer diameter of the second-type pressure sensor, and the second-type pressure sensor may abut against the groove bottom of the groove.

In an implementation, the brake caliper includes two caliper bodies, and the two caliper bodies are arranged on two sides of the brake disc along the axial direction of the brake disc. One caliper body is configured to mount one friction plate and one second-type pressure sensor, and the other caliper body is configured to mount the other friction plate and at least one first-type pressure sensor.

In this implementation, the two types of pressure sensors with different measurement scales are respectively mounted in two different caliper bodies, the two friction plates abut against the brake disc from two opposite sides of the brake disc respectively, and the two types of pressure sensors are configured to detect pressure against the two friction plates respectively. Each caliper body is configured to mount one friction plate and one type of pressure sensor. A structure is simple, and manufacturing is easy.

In an implementation, one of the at least one caliper body is configured to mount one friction plate and accommodate one first-type pressure sensor and one second-type pressure sensor. The second-type pressure sensor is arranged between the friction plate and the first-type pressure sensor along the axial direction of the brake disc.

In this implementation, the two types of pressure sensors with different measurement scales are mounted in the same caliper body, and the two types of pressure sensors are configured to detect pressure against the same friction plate. An overall structure of the brake caliper is more compact. This facilitates miniaturization of the electro-mechanical brake apparatus. The first-type pressure sensor is located on a side, away from the friction plate, of the second-type pressure sensor, so that a structure such as an elastic component can be arranged on a side of the first-type pressure sensor to protect the first-type pressure sensor.

According to a third aspect, this application provides a vehicle, including a wheel, a frame, and the electro-mechanical brake apparatus provided in any one of the foregoing aspects. An axial direction of a lead screw in the electro-mechanical brake apparatus is parallel to an axial direction of the wheel.

A brake motor in the electro-mechanical brake apparatus is configured to transmit a braking force through the lead screw, to drive two friction plates to move close to or away from each other along the axial direction of the lead screw, to clamp a brake disc of the wheel or release the brake disc.

Because an axial size of the electro-mechanical brake apparatus provided in this application is reduced, the vehicle provided in the third aspect of this application also facilitates arrangement of wheel space, so that larger internal space or a more compact structure is obtained.

### BRIEF DESCRIPTION OF DRAWINGS

To describe technical solutions in this application more clearly, the following briefly describes accompanying drawings for describing implementations. Clearly, the accompanying drawings in the following descriptions are merely some implementations of this application, and a person of ordinary skill in the art may still derive other drawings from these accompanying drawings without creative efforts.
FIG. 1 is a diagram of a partial exterior structure of a wheel of a vehicle according to an embodiment of this application;
FIG. 2 is a diagram of a partial cross-sectional structure of a wheel of a vehicle according to an embodiment of this application;
FIG. 3 is a diagram of a cross-sectional structure of an electro-mechanical brake apparatus according to an embodiment of this application;
FIG. 4 is a diagram of a cross-sectional structure of a brake caliper in an electro-mechanical brake apparatus according to an embodiment of this application;
FIG. 5 is a diagram of a cross-sectional structure of internal components of a housing in an electro-mechanical brake apparatus according to an embodiment of this application;
FIG. 6 is a diagram of a cross-sectional structure of an electro-mechanical brake apparatus according to an embodiment of this application;
FIG. 7 is a diagram of a cross-sectional structure of an electro-mechanical brake apparatus according to an embodiment of this application;
FIG. 8 is a diagram of a cross-sectional structure of internal components of a second caliper body in an electro-mechanical brake apparatus in an embodiment according to an embodiment of this application;
FIG. 9 is a diagram of a cross-sectional structure of internal components of a second caliper body in an electro-mechanical brake apparatus in another embodiment according to an embodiment of this application;
FIG. 10 is a diagram of an exterior structure of a slider in an electro-mechanical brake apparatus according to an embodiment of this application;
FIG. 11 is a locally enlarged diagram of a cross-sectional structure of internal components of a second caliper body in an electro-mechanical brake apparatus according to an embodiment of this application;
FIG. 12 is a diagram of a cross-sectional structure of internal components of a second caliper body in an electro-mechanical brake apparatus in another embodiment according to an embodiment of this application;
FIG. 13 is a diagram of an exterior structure of a first-type pressure sensor in an electro-mechanical brake apparatus in another embodiment according to an embodiment of this application;
FIG. 14 is a diagram of an exterior structure of a first-type pressure sensor in an electro-mechanical brake apparatus in an embodiment according to an embodiment of this application;
FIG. 15 is a diagram of a cross-sectional structure of internal components of a first caliper body in an electro-mechanical brake apparatus in an embodiment according to an embodiment of this application;
FIG. 16 is a locally enlarged diagram of a cross-sectional structure of internal components of a first caliper body in an electro-mechanical brake apparatus according to an embodiment of this application;
FIG. 17 is a diagram of an exterior structure of a thrust bearing in an electro-mechanical brake apparatus according to an embodiment of this application;
FIG. 18 is a diagram of a partial cross-sectional structure of internal components of a first caliper body in an electro-mechanical brake apparatus according to an embodiment of this application;
FIG. 19 is a diagram of an exterior structure of a lead screw in an electro-mechanical brake apparatus according to an embodiment of this application;
FIG. 20 is a diagram of a partial cross-sectional structure of a first caliper body in an electro-mechanical brake apparatus according to an embodiment of this application;
FIG. 21 is a diagram of a cross-sectional structure of an electro-mechanical brake apparatus according to an embodiment of this application;
FIG. 22 is a diagram of a partial cross-sectional structure of internal components of a first caliper body in an electro-mechanical brake apparatus according to an embodiment of this application;
FIG. 23 is a locally enlarged diagram of a cross-sectional structure of internal components of a first caliper body in an electro-mechanical brake apparatus according to an embodiment of this application;
FIG. 24 is a diagram of a partial cross-sectional structure of internal components of a first caliper body in an electro-mechanical brake apparatus according to an embodiment of this application;
FIG. 25 is a diagram of a partial cross-sectional structure of internal components of a first caliper body in an electro-mechanical brake apparatus according to an embodiment of this application;
FIG. 26 is a locally enlarged diagram of a cross-sectional structure of internal components of a first caliper body in an electro-mechanical brake apparatus according to an embodiment of this application;
FIG. 27 is a diagram of an exterior structure of a second-type pressure sensor in an electro-mechanical brake apparatus according to an embodiment of this application;
FIG. 28 is a diagram of a partial cross-sectional structure of internal components of a brake caliper in an electro-mechanical brake apparatus according to an embodiment of this application; and
FIG. 29 is a diagram of a cross-sectional structure of internal components of a first caliper body in an electro-mechanical brake apparatus according to an embodiment of this application.

### DESCRIPTION OF EMBODIMENTS

The following describes technical solutions in embodiments of this application with reference to accompanying drawings in embodiments of this application. Clearly, the described embodiments are merely some but not all of embodiments of this application. All other embodiments obtained by a person of ordinary skill in the art based on embodiments of this application without creative efforts shall fall within the protection scope of this application.

This application provides an electro-mechanical brake apparatus. The electro-mechanical brake apparatus includes a brake caliper and a lead screw. The brake caliper is configured to be fastened to a brake motor and accommodate the lead screw. The lead screw is configured to be connected to the brake motor in a transmission manner and drive two friction plates. The brake caliper includes two mounting surfaces. Each mounting surface is used for mounting one friction plate. Along an axial direction of the lead screw, a distance between the other mounting surface and the lead screw is greater than a distance between one mounting surface and the lead screw.

The lead screw includes two end faces. A distance between one end face and any mounting surface is greater than a distance between the other end face and the any mounting surface.

At least one of the one end face or the other mounting surface includes an accommodation groove. Each accommodation groove is configured to accommodate a part of a pressure sensor. Each pressure sensor is configured to detect pressure against one friction plate during braking.

An axial size, on a side close to the brake motor, of the electro-mechanical brake apparatus provided in this application is reduced, so that the electro-mechanical brake apparatus can adapt to wheel space.

This application provides a vehicle. The vehicle includes a wheel, a frame, and the electro-mechanical brake apparatus provided in this application. The electro-mechanical brake apparatus is fastened to the frame and is located at the wheel. The electro-mechanical brake apparatus performs braking for the wheel through an internal mechanism. An axial direction of a brake motor in the electro-mechanical brake apparatus is parallel to an axis of the wheel, and the brake motor is configured to be slidably connected to the frame along the axial direction.

An axial direction of a lead screw in the electro-mechanical brake apparatus is parallel to an axial direction of the wheel. The brake motor in the electro-mechanical brake apparatus is configured to transmit a braking force through the lead screw, to drive two friction plates to move close to or away from each other along the axial direction of the lead screw, to clamp a brake disc of the wheel or release the brake disc. The vehicle provided in this application facilitates arrangement of wheel space, and has larger internal space and a more compact structure.

The vehicle provided in this application may include a plurality of electro-mechanical brake apparatuses, and each electro-mechanical brake apparatus is configured to be disposed in correspondence with one wheel. The vehicle further includes a brake pedal, and the brake pedal is configured to control the plurality of electro-mechanical brake apparatuses to drive friction plates to move toward or away from brake discs of wheels.

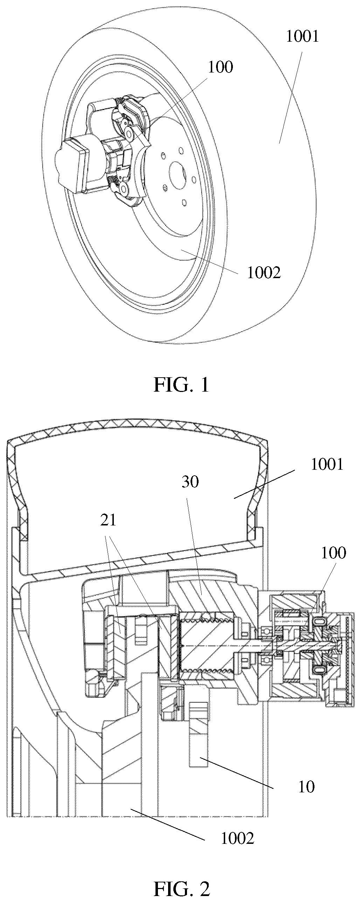

FIG. 1 is a diagram of a partial exterior structure of a wheel of a vehicle according to an embodiment of this application.

As shown in FIG. 1, the wheel 1001 is provided with a brake disc 1002, and the brake disc 1002 is coaxially fastened to a wheel hub of the wheel 1001. The wheel 1001 rotates relative to a frame, and the brake disc 1002 synchronously rotates along with the wheel 1001 relative to the frame. As shown in FIG. 1, an outer diameter size of the brake disc 1002 is less than an inner diameter size of an inner rim of the wheel, and the brake disc 1002 is accommodated in the inner rim of the wheel 1001.

The electro-mechanical brake apparatus 100 provided in this application is fastened to the frame. The electro-mechanical brake apparatus 100 at least partially extends into the inner rim of the wheel 1001, and cooperates with the brake disc 1002 to perform braking for the wheel 1001.

FIG. 2 is a diagram of a partial cross-sectional structure of a wheel of a vehicle according to an embodiment of this application.

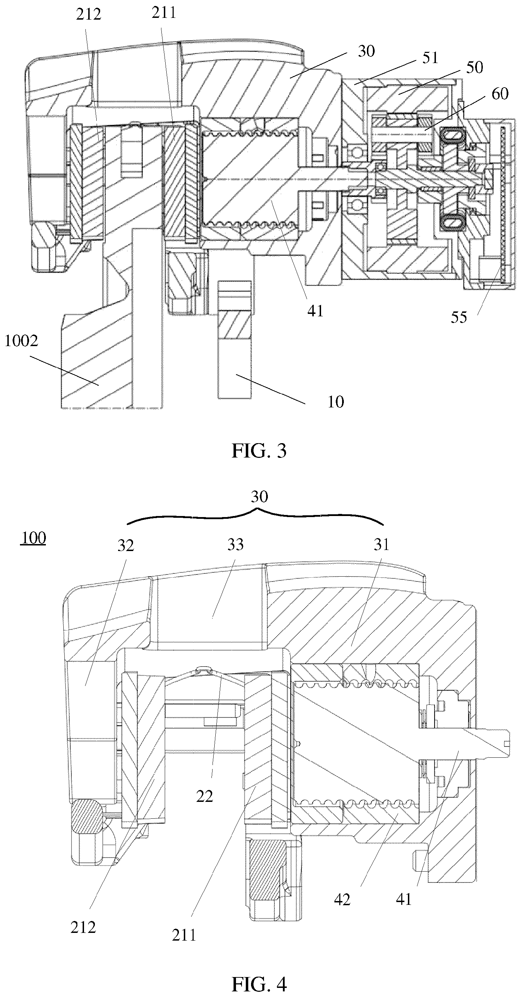

As shown in FIG. 2, the electro-mechanical brake apparatus 100 provided in this application includes a caliper support 10, a friction plate 21, a brake caliper 30, a lead screw 41, and a brake motor 50. For a connection relationship between the lead screw 41, the brake motor 50, and the brake caliper 30, refer to FIG. 3. The caliper support 10 is configured to be fastened to the frame. The brake caliper 30 is slidably connected to the caliper support 10. The brake motor 50 is fastened to the brake caliper 30, and synchronously slides along with the brake caliper 30 relative to the caliper support 10. In an embodiment, the brake caliper 30 and the caliper support 10 are slidably connected through a through hole and a sliding rod. To be specific, the brake caliper 30 is provided with one of the through hole and the sliding rod, and the caliper support 10 is provided with the other one of the through hole and the sliding rod. Relative sliding between the brake caliper 30 and the caliper support 10 is implemented through axial sliding of the sliding rod in the through hole.

It should be noted that a sliding direction of the brake caliper 30 relative to the caliper support 10 is parallel to an axial direction of the brake disc 1002, in other words, an axial direction of the brake motor 50 in the electro-mechanical brake apparatus 100 is parallel to an axis of the wheel 1001, and the brake motor 50 is configured to be slidably connected to the frame along the axial direction of the wheel 1001. In correspondence to the embodiment of cooperation between the through hole and the sliding rod, an axial direction of the through hole and an axis of the sliding rod are both parallel to the axial direction of the brake disc 1002.

The brake caliper 30 is configured to mount the friction plate 21, be fastened to the brake motor 50, and accommodate the lead screw 41. As shown in FIG. 2, there are two friction plates 21, and the two friction plates 21 are respectively arranged on two sides of the brake disc 1002 along the axial direction of the brake disc 1002. The two friction plates 21 respectively face two outer surfaces of the brake disc 1002 that face away from each other.

As shown in FIG. 2, the brake motor 50 in the electro-mechanical brake apparatus 100 is configured to drive the two friction plates 21 to slide along the axial direction of the wheel 1001 to abut against the brake disc 1002. In this embodiment, the brake motor 50 is configured to drive the friction plate 21 to move toward or away from the brake disc 1002 of the vehicle. The brake motor 50 drives the lead screw 41 to rotate relative to the caliper support 10, to push the two friction plates 21 to slide toward each other and be in contact with the two outer surfaces of the brake disc 1002 that face away from each other, to generate friction to clamp the brake disc 1002.

For ease of description, along the axial direction of the brake disc 1002, in this application, a friction plate 21 of the two friction plates 21 that is close to the lead screw 41 is defined as a first friction plate 211, and a friction plate 21 of the two friction plates 21 that is away from the lead screw 41 is defined as a second friction plate 212.

FIG. 3 is a diagram of a cross-sectional structure of the electro-mechanical brake apparatus 100 according to an embodiment of this application.

As shown in FIG. 3, the electro-mechanical brake apparatus 100 in this application further includes a brake caliper 30, a lead screw 41, and a brake motor 50. An axis of the lead screw 41 is parallel to the axial direction of the brake disc 1002. Along an axial direction of the lead screw 41, the brake caliper 30 is closer to the wheel 1001 than the brake motor 50. The brake caliper 30 is configured to be fastened to the brake motor 50 and accommodate the lead screw 41. In an embodiment, the electro-mechanical brake apparatus 100 in this application further includes a gearbox 60, and the gearbox 60 is configured to connect the brake motor 50 to the lead screw 41 in a transmission manner. The gearbox 60 is configured to adjust a rotational speed and a torque of a braking force output by the brake motor 50, and transmit an adjusted braking force to the lead screw 41.

The lead screw 41 is configured to be connected to the brake motor 50 in a transmission manner and drive the two friction plates 21. The two friction plates 21 are configured to be slidably connected to the caliper support 10. The lead screw 41 is configured to drive the first friction plate 211 to slide relative to the caliper support 10. The second friction plate 212 is configured to be fastened to or slidably connected to the brake caliper 30. To be specific, the second friction plate 212, the first friction plate 211, the lead screw 41, and the brake motor 50 are sequentially arranged along the axial direction of the lead screw 41.

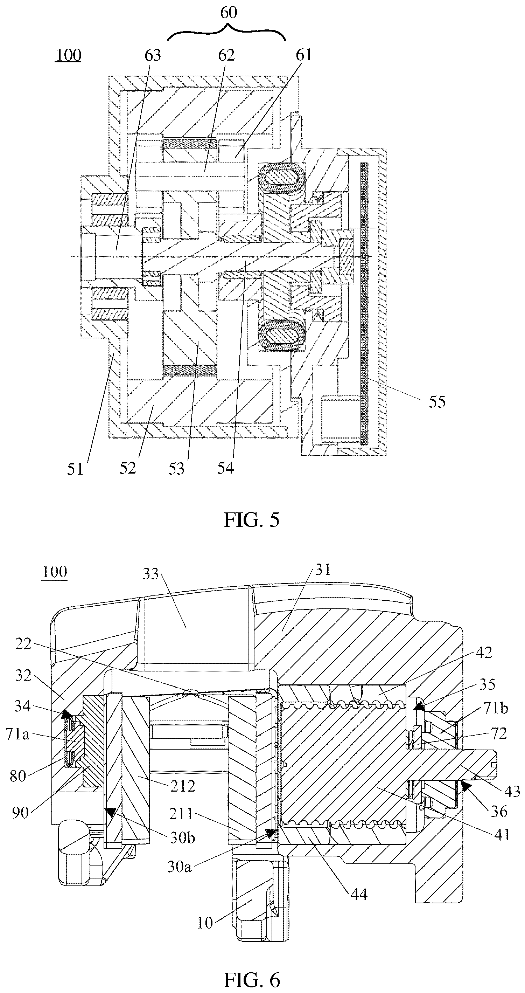

In this embodiment, the brake motor 50 includes a housing 51, and the housing 51 is fastened to the brake caliper 30 along the axial direction of the brake motor 50. As shown in FIG. 5, the housing 51 is configured to fasten a stator 52 of the brake motor 50. An inner cavity of the housing 51 is configured to accommodate the stator 52 and a rotor 53 of the brake motor 50. In an embodiment, the housing 51 of the brake motor 50 is further configured to accommodate a gear set 61 of the gearbox 60. To be specific, the gear set 61 of the gearbox 60 is integrated in the housing 51 of the brake motor 50, so that an internal mechanism of the electro-mechanical brake apparatus 100 is arranged more compactly, and an overall size is reduced. The brake caliper 30 is configured to accommodate the lead screw 41. The brake caliper 30 is further configured to drive the housing 51 and slide relative to the caliper support 10 along the axial direction of the brake disc 1002. The gearbox 60 is configured to connect the lead screw 41 to the brake motor 50 in a transmission manner. The brake motor 50 is configured to drive the gearbox 60 to rotate to push the friction plate 21 and drive the brake caliper 30.

FIG. 4 is a diagram of a cross-sectional structure of the brake caliper 30 in the electro-mechanical brake apparatus 100 according to an embodiment of this application.

The brake caliper 30 includes two mounting surfaces. Each mounting surface is used for mounting one friction plate 21. Along the axial direction of the lead screw 41, a distance between the other mounting surface and the lead screw 41 is greater than a distance between one mounting surface and the lead screw 41. A mounting surface that has a smaller distance from the lead screw 41 along the axial direction of the lead screw 41 is defined as a first mounting surface 30a. A mounting surface that has a larger distance from the lead screw 41 along the axial direction of the lead screw 41 is defined as a second mounting surface 30b. To be specific, the second mounting surface 30b, the first mounting surface 30a, the lead screw 41, and the brake motor 50 are sequentially arranged along the axial direction of the lead screw 41. The first friction plate 211 is mounted on the first mounting surface 30a, and the second friction plate 212 is mounted on the second mounting surface 30b.

In this embodiment, the brake caliper 30 is approximately U-shaped, the brake caliper 30 includes at least one caliper body, and the at least one caliper body is configured to mount at least one friction plate 21. As shown in FIG. 4, the brake caliper 30 includes two caliper bodies and a connection portion 33 connected between the two caliper bodies. In an embodiment, a caliper body of the brake caliper 30 that is close to the brake motor 50 along the axial direction of the lead screw 41 is a first caliper body 31, and a caliper body of the brake caliper 30 that is away from the brake motor 50 along the axial direction of the lead screw 41 is a second caliper body 32. As shown in FIG. 4, the first caliper body 31 is configured to mount the first friction plate 211, and the second caliper body 32 is configured to mount the second friction plate 212.

The first caliper body 31 and the second caliper body 32 are respectively arranged on two sides of the brake disc 1002 along the axial direction of the brake disc 1002. The first caliper body 31 and the second caliper body 32 are further respectively arranged on two sides of the two friction plates 21 along the axial direction of the brake disc 1002. Along the axial direction of the brake disc 1002, the first mounting surface 30a is a surface of the first caliper body 31 that faces the second caliper body 32, and the second mounting surface 30b is a surface of the second caliper body 32 that faces the first caliper body 31. In other words, the first caliper body 31, the first friction plate 211, the brake disc 1002, the second friction plate 212, and the second caliper body 32 are sequentially arranged along the axial direction of the brake disc 1002. The connection portion 33 is located on an outer side of the brake disc 1002 along a radial direction of the brake disc 1002. The connection portion 33 is configured to be fastened to the first caliper body 31 to the second caliper body 32.

In an embodiment, the first friction plate 211 is slidably connected to the first caliper body 31. In an embodiment, the second friction plate 212 is slidably connected to the second caliper body 32.

The first caliper body 31 is further configured to be slidably connected to the caliper support 10. The lead screw 41 is accommodated in the first caliper body 31. The housing 51 is fastened on a side, away from the second caliper body 32, of the first caliper body 31. The lead screw 41 is configured to be connected to the gearbox 60 in a transmission manner. The first caliper body 31 and the housing 51 are respectively provided with through holes. The through holes are configured to avoid a transmission shaft 43 between the lead screw 41 and the gearbox 60. In an embodiment, the transmission shaft 43 and the lead screw 41 are of an integrated structure. To be specific, one end of the lead screw 41 passes through the two through holes and extends into the housing 51 to be connected to the gearbox 60 in a transmission manner.

In an embodiment, the transmission shaft 43 and a drive shaft of the gearbox 60 are of an integrated structure. To be specific, the drive shaft of the gearbox 60 passes through the two through holes and extends into an inner cavity of the first caliper body 31 to be fastened to the lead screw 41.

The electro-mechanical brake apparatus 100 in this application further includes a swivel nut 42. The swivel nut 42 is coaxially sleeved on an outer side of the lead screw 41, and the lead screw 41 is configured to be in coaxial transmission with an output shaft of the gearbox 60. The output shaft of the gearbox 60 drives the lead screw 41 to rotate, to drive the swivel nut 42 to slide.

In an embodiment, an outer circumferential surface of the lead screw 41 includes a spiral groove 412, and the lead screw 41 is meshed with the swivel nut 42 through the spiral groove 412. When the lead screw 41 is driven by the gearbox 60 to rotate along the axis of the lead screw 41, the lead screw 41 may drive the swivel nut 42 to slide along the axis of the lead screw 41. On a side, away from the gearbox 60, of the swivel nut 42, the swivel nut 42, the first friction plate 211, and the brake disc 1002 are sequentially arranged along the axis of the lead screw 41. The lead screw 41 drives the swivel nut 42 to slide along the axis of the lead screw 41, to drive the friction plate 21 to move relative to the brake disc 1002.

As shown in FIG. 5, the brake motor 50 further includes a motor shaft 54. An axis of the motor shaft 54 coincides with the axis of the lead screw 41. The motor shaft 54 is configured to coaxially fasten the rotor 53 of the brake motor 50. The motor shaft 54 is further configured to coaxially fasten the output shaft of the gearbox 60.

In this embodiment of this application, the stator 52 of the brake motor 50 is further configured to be electrically connected to an external circuit. During operation of the electro-mechanical brake apparatus 100 in this application, an alternating current of the external circuit can enable the stator 52 to generate an alternating magnetic field. The rotor 53 rotates around the axial direction of the lead screw 41 based on the alternating magnetic field, and drives the motor shaft 54 to synchronously rotate. However, based on different voltage phases of the alternating current, a rotation direction of the rotor 53 also varies. To be specific, the motor shaft 54 of the brake motor 50 can rotate in one direction to drive the friction plate 21 to implement braking, or the motor shaft 54 of the brake motor 50 can rotate in another direction to release the friction plate 21 from the brake disc 1002 to cancel braking. The one direction is a direction in which the motor shaft 54 of the brake motor 50 rotates forward. The another direction is a direction in which the motor shaft 54 of the brake motor 50 rotates reversely.

When the brake motor 50 rotates forward, the gearbox 60 drives the lead screw 41 to rotate forward along the axis of the lead screw 41, the swivel nut 42 slides toward the brake disc 1002 along the axis of the lead screw 41, and the friction plate 21 is driven to be in contact with the brake disc 1002 to implement braking. When the brake motor 50 rotates reversely, the gearbox 60 drives the lead screw 41 to rotate reversely along the axis of the lead screw 41, the swivel nut 42 slides along the axis of the lead screw 41 in a direction away from the brake disc 1002, and the friction plate 21 is released from the brake disc 1002.

In some embodiments, a separation spring 22 is further disposed between the two friction plates 21. Two opposite ends of the separation spring 22 respectively abut against the two friction plates 21. The separation spring 22 is configured to provide an elastic force to enable the two friction plates 21 to move away from each other along the axial direction of the lead screw 41, to ensure that after the swivel nut 42 slides away from the brake disc 1002, the two friction plates 21 are separately released from contact with the brake disc 1002 to cancel braking.

In an embodiment, the electro-mechanical brake apparatus 100 in this application further includes a ball, and the ball is rollably disposed between the lead screw 41 and the swivel nut 42. For ease of description of an overall structure, the ball is not shown in the figure. There are a plurality of balls, and the balls abut between the outer circumferential surface of the lead screw 41 and an inner circumferential surface of the swivel nut 42. The balls are configured to reduce friction between the lead screw 41 and the swivel nut 42, to improve efficiency of transmission between the lead screw 41 and the swivel nut 42.

FIG. 5 is a diagram of a cross-sectional structure of internal components of the housing 51 in the electro-mechanical brake apparatus according to an embodiment of this application.

As shown in FIG. 5, in an embodiment, the stator 52 and the rotor 53 are coaxially arranged along a radial direction of the brake motor 50. The stator 52 is configured to drive the rotor 53 to rotate, to output power. The brake motor 50 further includes a motor shaft 54, and the motor shaft 54 is coaxially fastened to the rotor 53.

In the embodiment shown in FIG. 5, the brake motor 50 is an inner rotor motor, the stator 52 is coaxially sleeved on an outer side of the rotor 53, and the rotor 53 is located in a center hole of the stator 52. In this case, the housing 51 is configured to fasten the stator 52, and the stator 52 drives the rotor 53 to rotate in the center hole of the stator 52. In an embodiment, the brake motor 50 is an outer rotor motor, the rotor 53 is coaxially sleeved on an outer side of the stator 52, and the stator 52 is located in a center hole of the rotor 53. In this case, a structure of a support cylinder is disposed in the housing 51, the support cylinder is configured to fasten the stator 52, and the stator 52 drives the rotor 53 to rotate on the outer side of the stator 52.

The gearbox 60 includes an output shaft 62, a drive shaft 63, and the gear set 61. The output shaft 62 and the drive shaft 63 are connected in a transmission manner through the gear set 61. The output shaft 62 is configured to be connected to the brake motor 50 in a transmission manner. The drive shaft 63 is configured to be connected to the lead screw 41 in a transmission manner. In an embodiment, the output shaft 62 of the gearbox 60 is configured to be in transmission with the motor shaft 54 of the brake motor 50. The drive shaft 63 of the gearbox 60 is configured to be in coaxial transmission with the lead screw 41.

The gear set 61 is configured to adjust a rotational speed and a torque of a braking force output by the motor shaft 54 of the brake motor 50. In an embodiment, an axis of the output shaft 62 of the gearbox 60 and an axis of the drive shaft 63 are biased along the radial direction of the brake motor 50. The gear set 61 has a compact structure and can provide a large reduction ratio. This facilitates miniaturization of a drive mechanism in this application.

As shown in FIG. 3 and FIG. 5, the gearbox 60 is a coaxial gearbox, and the gear set 61 is a planetary gear set. In such a structure, a size of the gearbox 60 can be reduced. Therefore, the output shaft 62 of the gearbox 60 is connected to the motor shaft 54 of the brake motor 50 in a transmission manner through the planetary gear set. In this case, the motor shaft 54 and the output shaft 62 are arranged at a spacing along the axial direction of the brake motor 50. In an embodiment, the gear set 61 of the gearbox 60 is a parallel-shaft gear set. In this case, the output shaft 62 of the gearbox 60 is in coaxial transmission with the motor shaft 54 of the brake motor 50. The foregoing implementation does not affect function implementation of the electro-mechanical brake apparatus 100 in this application.

When the vehicle needs to be stopped, the stator 52 of the brake motor 50 drives the rotor 53 to drive the motor shaft 54 to rotate forward. The motor shaft 54 drives the output shaft 62, connected to the motor shaft 54 in a transmission manner, of the gearbox 60 to synchronously rotate forward. The output shaft 62 drives, through the gear set 61, the drive shaft 63 to rotate forward. The drive shaft 63 drives the lead screw 41 to synchronously rotate forward. The lead screw 41 converts a rotation action of the lead screw 41 into a sliding action of the swivel nut 42. In other words, the lead screw 41 drives the swivel nut 42 to slide along the axis of the lead screw 41. A sliding direction of the swivel nut 42 is a direction toward the brake disc 1002. The swivel nut 42 pushes the first friction plate 211 to move toward the brake disc 1002, and enables the first friction plate 211 to be in contact with the brake disc 1002 to generate friction.

After the first friction plate 211 is in contact with and abuts against the brake disc 1002, the stator 52 of the brake motor 50 continues to drive the rotor 53 to rotate forward, and the swivel nut 42 continues to slide along the axial direction of the lead screw 41 through the same power transmission path. Because a position of the brake disc 1002 is fixed, the swivel nut 42, the first friction plate 211, and the brake disc 1002 sequentially abut against each other. The swivel nut 42 receives reverse abutting thrust from the brake disc 1002. An axial sliding action of the swivel nut 42 relative to the lead screw 41 is converted into a sliding action of the brake caliper 30 being reversely pushed by the swivel nut 42 relative to the caliper support 10. To be specific, after the first friction plate 211 is in contact with and abuts against the brake disc 1002, an axial size of meshing between the lead screw 41 and the swivel nut 42 further increases under the action of the brake motor 50, and the brake caliper 30 is reversely pushed to slide relative to the caliper support 10 in a direction toward the housing 51. The housing 51 synchronously slides along with the brake caliper 30 in a direction away from the brake disc 1002.

The brake caliper 30 slides in a direction toward the housing 51, to drive the second caliper body 32 to synchronously slide in a direction toward the housing 51. Because the second caliper body 32 is located on a side, away from the housing 51, of the brake disc 1002, a sliding direction of the second caliper body 32 is a direction toward the brake disc 1002. To be specific, after the first friction plate 211 is in contact with and abuts against the brake disc 1002, the lead screw 41 further drives the second caliper body 32 to slide toward the brake disc 1002, so that the second caliper body 32 drives the second friction plate 212 to synchronously slide toward the brake disc 1002, and the second friction plate 212 is in contact with the brake disc 1002 to generate friction.

In this way, the lead screw 41 and the swivel nut 42 cooperate with each other to drive the two friction plates 21 located on two sides of the brake disc 1002 to slide toward each other and be respectively in contact with the two outer surfaces of the brake disc 1002 that face away from each other, to generate friction to clamp the brake disc 1002, and implement braking for the vehicle.

After the braking is completed, the stator of the brake motor 50 drives the rotor 53 to rotate reversely. The rotor 53 sequentially drives the output shaft 62 and the drive shaft 63 of the gearbox 60, and the lead screw 41 to synchronously rotate reversely. Reverse rotation of the lead screw 41 may drive the swivel nut 42 to slide in a direction away from the brake disc 1002. In this way, a spacing between the two friction plates 21 increases, the two friction plates 21 are separately released from contact with the brake disc 1002 under the action of the separation spring 22 to cancel the braking, and the wheel 1001 continues to rotate and drives the vehicle to travel.

In an embodiment, the electro-mechanical brake apparatus 100 includes a reset spring, and the reset spring is arranged between the brake caliper 30 and the caliper support 10. For ease of description of an overall structure, the reset spring is not shown in the figure. The reset spring is configured to drive the brake caliper 30 to slide relative to the caliper support 10 in a direction away from the housing 51, to drive the second caliper body 32 to slide in a direction away from the brake disc 1002, and ensure that the two friction plates 21 are separately and reliably separated from the brake disc 1002.

In this way, after the braking is completed, the lead screw 41 and the swivel nut 42 cooperate with each other to drive the friction plates 21 located on two sides of the brake disc 1002 to slide away from each other and be released from contact with the two outer surfaces of the brake disc 1002 that face away from each other, to cancel the braking, so that the wheel 1001 can continue to rotate and drive the vehicle to travel.

In an embodiment, the brake motor 50 further includes a circuit board 55. The circuit board 55 is configured to fasten a drive circuit, and the drive circuit is configured to drive the stator 52 of the brake motor 50. The circuit board 55 is accommodated in the inner cavity of the housing 51 together with the brake motor 50. This can shorten a signal transmission distance from the drive circuit to the stator 52 of the brake motor 50, and simplify an internal line arrangement of the brake motor 50. In addition, the housing 51 may provide reliable sealing and protection effect for the circuit board 55.

In an embodiment, the electro-mechanical brake apparatus 100 in this application includes a position sensor. The position sensor is configured to detect a rotation angle of the motor shaft 54 of the brake motor 50, to adjust a magnitude of a braking force of the brake motor 50. The position sensor includes a stator and a rotor. The stator of the position sensor is fastened to the housing 51. The rotor of the position sensor is in coaxial transmission with the motor shaft 54 of the brake motor 50 or the output shaft 62 of the gearbox 60. The stator of the position sensor is directly fastened to the housing 51. In an embodiment, the stator of the position sensor is fastened to the circuit board 55 and is indirectly fastened to the housing 51 through the circuit board 55. The rotor of the position sensor is in coaxial transmission with the motor shaft 54 of the brake motor 50 or the drive shaft 63 of the gearbox 60.

Through cooperation between the stator and the rotor of the position sensor, a rotation angle of the motor shaft 54 of the brake motor 50 or the drive shaft 63 of the gearbox 60 in the inner cavity of the housing 51 can be detected. The position sensor is further communicatively connected to the drive circuit on the circuit board 55. The drive circuit receives an angle signal detected by the position sensor, calculates a rotation angle of the rotor 53 of the brake motor 50, and then adjusts a magnitude of a braking force of the brake motor 50, in other words, adjusts braking intensity for the vehicle.

In an embodiment, the drive mechanism includes a locking mechanism. The locking mechanism is configured to lock or release the motor shaft 54 of the brake motor 50, or the locking mechanism is configured to lock or release the drive shaft 63 of the gearbox 60, so that the drive mechanism in this application further has a parking function. In an embodiment, a part of the locking mechanism is fastened to the housing 51, and the other part acts on the motor shaft 54 of the brake motor 50 or the drive shaft 63 of the gearbox 60. When the friction plate 21 of the electro-mechanical brake apparatus 100 abuts against the brake disc 1002, the motor shaft 54 of the brake motor 50 or the drive shaft 63 of the gearbox 60 may be locked through the locking mechanism, to retain the state in which the friction plate 21 abuts against the brake disc 1002. The brake disc 1002 no longer rotates, and the vehicle enters a parking state.

For the electro-mechanical brake apparatus 100 in this application, the first caliper body 31 and the second caliper body 32 are respectively arranged on two sides of the brake disc 1002 along the axial direction of the brake disc 1002. The first caliper body 31 is configured to mount the first friction plate 211, and the second caliper body 32 is configured to mount the second friction plate 212. At least one of the first caliper body 31 and the second caliper body 32 is configured to accommodate a pressure sensor, and the pressure sensor is configured to detect pressure against the first friction plate 211 or the second friction plate 212, to improve braking force control precision of the brake motor 50.

In an embodiment, the first caliper body 31 is configured to accommodate a pressure sensor and the lead screw 41. Along the axial direction of the brake disc 1002, the lead screw 41 is configured to at least partially accommodate the pressure sensor, to reduce an axial size of the first caliper body 31 and an overall axial size of the electro-mechanical brake apparatus 100. This facilitates arrangement of wheel space of the vehicle.

In an embodiment, the second caliper body 32 is configured to accommodate a pressure sensor. This simplifies an internal structure of the first caliper body 31 and reduces an axial size of the first caliper body 31. In this case, an axial size on a side, close to the first caliper body 31, of the electro-mechanical brake apparatus 100 is reduced. This also facilitates arrangement of wheel space of the vehicle.

In an embodiment, the first caliper body 31 and the second caliper body 32 are respectively configured to accommodate pressure sensors. The two pressure sensors are respectively configured to detect pressure against the first friction plate 211 and the second friction plate 212. Through cooperation between the two pressure sensors, braking force control precision of the electro-mechanical brake apparatus 100 can be improved.

In an embodiment, the brake caliper 30 includes a first mounting surface 30a and a second mounting surface 30b. The first mounting surface 30a is located on the first caliper body 31, and the second mounting surface 30b is located on the second caliper body 32. Along the axial direction of the brake disc 1002, the first mounting surface 30a is a surface of the first caliper body 31 that faces the second caliper body 32, and the second mounting surface 30b is a surface of the second caliper body 32 that faces the first caliper body 31. The first mounting surface 30a is used for mounting the first friction plate 211, and the second mounting surface 30b is used for mounting the second friction plate 212.

As shown in FIG. 6, the first mounting surface 30a includes a groove 35, and the groove 35 is configured to accommodate one pressure sensor. The pressure sensor accommodated in the groove 35 is configured to detect pressure applied to the first friction plate 211. In an embodiment, the second mounting surface 30b includes a first accommodation groove 34. The first accommodation groove 34 is configured to accommodate a part of another pressure sensor. The pressure sensor partially accommodated in the first accommodation groove 34 is configured to detect pressure applied to the second friction plate 212.

It should be noted that different names are used for the another pressure sensor and the one pressure sensor because specific mounting positions are different. In an embodiment, measurement scales of the two pressure sensors may be set differently. That the electro-mechanical brake apparatus 100 provided in this application includes the one pressure sensor or the another pressure sensor may be understood as that the electro-mechanical brake apparatus 100 provided in this application includes a pressure sensor, and the pressure sensor has two different mounting positions. In an actual application scenario, due to different mounting positions of the pressure sensor, structures of the one pressure sensor and the another pressure sensor may be adaptively adjusted, without affecting function implementation of the pressure sensor.

In this embodiment of this application, the pressure sensor accommodated in the second caliper body 32is partially accommodated in the first accommodation groove 34, so that a ratio of the pressure sensor accommodated in the second caliper body 32 to axial space of the second caliper body 32 can be reduced, to reduce an axial size at a remote end of the brake caliper 30 relative to the brake motor 50. In this way, an axial size, on a side close to the brake motor 50, of the electro-mechanical brake apparatus 100 in this application is reduced, and the electro-mechanical brake apparatus 100 in this application has a compact structure. This facilitates miniaturization of the electro-mechanical brake apparatus 100 in this application.

The groove 35 is further configured to accommodate the lead screw 41. For a relative position relationship between the lead screw 41 and the pressure sensor that are accommodated in the groove 35, in an embodiment, refer to FIG. 6. The axis of the lead screw 41 is parallel to the axis of the brake disc 1002, and the axis of the lead screw 41 coincides with an axis of the groove 35. Along the axial direction of the lead screw 41, the pressure sensor accommodated in the groove 35 is arranged between the lead screw 41 and a groove bottom 351 of the groove 35, to detect, through reverse thrust of the first friction plate 211 to the lead screw 41, pressure applied to the first friction plate 211.

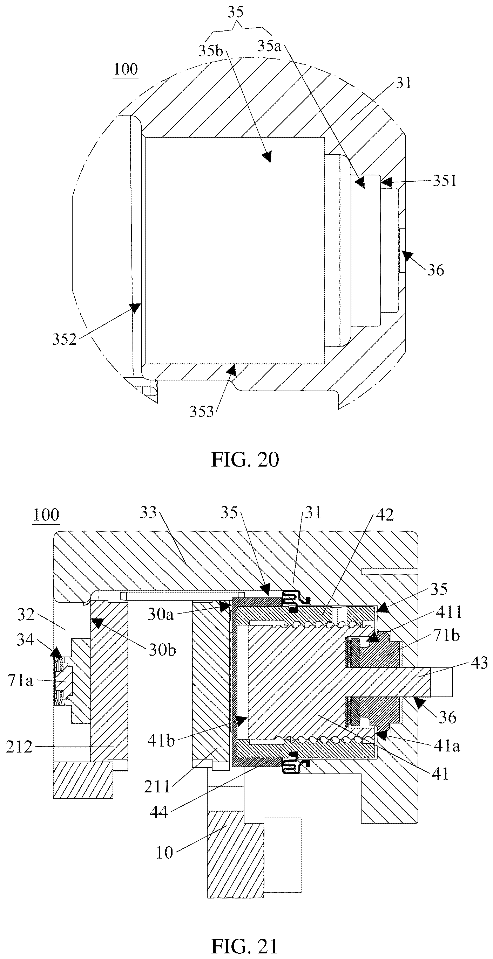

In an embodiment, as shown in FIG. 21, along the axial direction of the lead screw 41, the lead screw 41 includes two end faces, and a distance between one end face and any mounting surface is greater than a distance between the other end face and the any mounting surface. For ease of description, along the axial direction of the lead screw 41, an end face of the lead screw 41 that has a larger distance from any mounting surface is defined as a first end face 41a, and an end face of the lead screw 41 that has a smaller distance from the any mounting surface is defined as a second end face 41b. The first end face 41a includes a second accommodation groove 411, and the second accommodation groove 411 is configured to accommodate a part of the another pressure sensor. It can be understood that, in this application, the pressure sensor accommodated in the first caliper body 31 is partially accommodated in the second accommodation groove 411, so that space occupied by the pressure sensor accommodated in the first caliper body 31 along the axial direction of the lead screw 41 can be reduced, to reduce an axial size at a near end of the brake caliper 30 relative to the brake motor 50. In this way, an axial size, on a side close to the brake motor 50, of the electro-mechanical brake apparatus 100 in this application is reduced, and the electro-mechanical brake apparatus 100 in this application has a compact structure. This facilitates miniaturization of the electro-mechanical brake apparatus 100 in this application.

To be specific, according to the foregoing embodiment, in the electro-mechanical brake apparatus 100 in this application, an accommodation groove is provided at the near end or the remote end of the brake caliper 30 relative to the brake motor 50, and one accommodation groove is configured to partially accommodate one pressure sensor, to reduce space occupied by the pressure sensor along the axial direction of the lead screw 41 while ensuring reliable braking of the electro-mechanical brake apparatus 100 through the pressure sensor. In this way, the axial size at the near end of the brake caliper 30 relative to the brake motor 50 is reduced, and the electro-mechanical brake apparatus 100 in this application has a compact structure. This facilitates miniaturization of the electro-mechanical brake apparatus 100 in this application.

In an embodiment, the brake caliper 30 includes at least one caliper body, and the at least one caliper body is configured to mount two types of pressure sensors. As shown in FIG. 6, the two types of pressure sensors are defined as a first-type pressure sensor 71a and a second-type pressure sensor 71b. The first-type pressure sensor 71a is configured to detect, during zero point detection, pressure applied to the at least one friction plate 21. The second-type pressure sensor 71b is configured to detect, during braking, pressure applied by the at least one friction plate 21 to the brake disc 1002.

During operation of the electro-mechanical brake apparatus 100 in this application, the electro-mechanical brake apparatus 100 needs to first drive the first friction plate 211 to slide toward the brake disc 1002, and after the first friction plate 211 is in contact with the brake disc 1002, drive the first friction plate 211 to press against the brake disc 1002 to implement a braking function of the first friction plate 211 for the brake disc 1002. Then, as a braking process proceeds, the second friction plate 212 is also driven by the electro-mechanical brake apparatus 100 to slide toward the brake disc 1002, and after the second friction plate 212 is in contact with the brake disc 1002, the second friction plate 212 is driven to press against the brake disc 1002 to implement a braking function of the second friction plate 212 for the brake disc 1002.

That is, during braking, the brake motor 50 sequentially pushes the first friction plate 211 and the second friction plate 212 to slide toward the brake disc 1002 until the first friction plate 211 and the second friction plate 212 are in contact with the brake disc 1002. In a process in which the electro-mechanical brake apparatus 100 drives the at least one friction plate 21 to clamp the brake disc 1002, the electro-mechanical brake apparatus 100 maintains pressure against the at least one friction plate 21, to avoid excessively long braking time caused by an empty stroke. The electro-mechanical brake apparatus 100 further needs to ensure small initial pressure against the at least one friction plate 21, to avoid an excessively large braking force during braking. Control on the initial pressure is implemented through zero point detection.

In an embodiment, zero point detection may be performed in a process in which the brake motor 50 drives the friction plate 21 to move away from the brake disc 1002. In a process in which the brake motor 50 rotates reversely to make the two friction plates 21 slide away from the brake disc 1002 along the axial direction of the lead screw 41, the two friction plates 21 are separated away from each other along the axial direction of the brake disc 1002. In this case, the two friction plates 21 usually gradually move away from the brake disc 1002 under the action of components such as the reset spring and the separation spring 22. The first-type pressure sensor 71a may be configured to detect, in this process, pressure applied to the friction plate 21, to determine a preset pressure value. The preset pressure value indicates that pressure applied by the electro-mechanical brake apparatus 100 to the at least one friction plate 21 during breaking is greater than zero. To be specific, the first-type pressure sensor 71a is configured to ensure that the electro-mechanical brake apparatus 100 maintains pressure against the at least one friction plate 21.

In a process in which the electro-mechanical brake apparatus 100 cancels braking, that is, in the foregoing zero point detection process, pressure against the first-type pressure sensor 71a gradually decreases as the process proceeds. When the first-type pressure sensor 71a detects that pressure applied to the at least one friction plate 21 is less than the preset pressure value, the brake motor 50 stops operating. The preset pressure value may further indicate an initial relative angle between the stator 52 and the rotor 53 of the brake motor 50. In a subsequent braking process, the stator 52 drives, based on the relative angle, the rotor 53 to rotate to precisely control a braking force. In other words, when pressure detected by the first-type pressure sensor 71a is less than the preset pressure value, a relative position between the friction plate 21 and the brake disc 1002 is a zero point of the electro-mechanical brake apparatus 100 in this application.

In an embodiment, a measurement scale of the first-type pressure sensor 71a is less than a measurement scale of the second-type pressure sensor 71b. Because the measurement scale of the first-type pressure sensor 71a is small, when precision levels of the two types of pressure sensors with different measurement scales are the same or similar, the first-type pressure sensor 71a has a smaller detection error range and higher precision. A detection result obtained when the first-type pressure sensor 71a is used in a zero point detection process of the electro-mechanical brake apparatus 100 in this application is accurate.

In an embodiment, zero point detection may alternatively be performed in a process in which the brake motor 50 rotates forward to make the two friction plates 21 slide toward the brake disc 1002 along the axial direction of the lead screw 41. The first-type pressure sensor 71a is configured to detect whether the initial pressure against the at least one friction plate 21 is less than the preset pressure value and is greater than zero, to correct the initial relative angle between the stator 52 and the rotor 53 of the brake motor 50. For the electro-mechanical brake apparatus 100, an axial spacing between the friction plate 21 and the brake disc 1002 of the electro-mechanical brake apparatus 100 is usually considered during selection of a zero point. When a selected zero point leads, the axial spacing between the brake disc 1002 and the friction plate 21 is excessively large, and it takes a long time to clamp the brake disc 1002 during braking of the electro-mechanical brake apparatus 100. This increases a braking distance of the electro-mechanical brake apparatus 100 and affects a braking distance of the vehicle. When a selected zero point lags, the axial spacing between the brake disc 1002 and the friction plate 21 is excessively small, and the friction plate 21 is in contact with the brake disc 1002 too early. Consequently, a subsequently applied braking force increases friction between the friction plate 21 and the brake disc 1002. This increasing a drag torque of the electro-mechanical brake apparatus 100, increasing energy consumption, and affects a normal mileage of the vehicle.

During operation of the vehicle, the axial spacing between the brake disc 1002 and the friction plate 21 may change due to external impact, loss of the friction plate 21 or the brake disc 1002, or the like. During operation of the electro-mechanical brake apparatus 100 in this application, the first-type pressure sensor 71a is configured to detect pressure applied to the friction plate 21 during zero point detection, so that the initial pressure of the brake motor 50 against the friction plate 21 can be adjusted in real time, to more accurately control a braking force during braking.

Therefore, the first-type pressure sensor 71a with a small measurement scale is disposed. The first-type pressure sensor 71a can improve zero point detection precision of the electro-mechanical brake apparatus 100 in this application, and an error between pressure detected by the first-type pressure sensor 71a when the electro-mechanical brake apparatus 100 is at a zero point and the preset pressure value can be reduced, to improve braking precision of the electro-mechanical brake apparatus 100 in this application.

The second-type pressure sensor 71b is configured to detect a braking force during entire braking. Because the two friction plates 21 are usually subject to large pressure during braking of the electro-mechanical brake apparatus 100 in this application, the second-type pressure sensor 71b with a large measurement scale is disposed. The second-type pressure sensor 71b can detect a braking force during entire braking, and feed back the braking force to the brake motor 50 to adjust an output torque of the brake motor 50, to ensure reliable braking of the electro-mechanical brake apparatus 100 in this application.

In an embodiment, the measurement scale of the first-type pressure sensor 71a is less than 100 N.

In an embodiment, the measurement scale of the second-type pressure sensor 71b is greater than 60 kN.

In an embodiment, one of the at least one caliper body is configured to mount one friction plate 21 and accommodate at least one first-type pressure sensor 71a. Along the axial direction of the brake disc 1002, the at least one first-type pressure sensor 71a is arranged on a side, away from the brake disc 1002, of the friction plate 21. The at least one first-type pressure sensor 71a is configured to detect pressure applied to the friction plate 21.

FIG. 6 is a diagram of a cross-sectional structure of the electro-mechanical brake apparatus 100 provided in this application. As shown in FIG. 6, the second caliper body 32 is configured to mount the second friction plate 212 and accommodate one first-type pressure sensor 71a. An axis of the first-type pressure sensor 71a coincides with the axis of the lead screw 41. Along the axial direction of the lead screw 41, the first-type pressure sensor 71a is arranged on a side, away from the first friction plate 211, of the second friction plate 212, and the first-type pressure sensor 71a is configured to detect, during zero point detection, pressure applied to the second friction plate 212. The first-type pressure sensor 71a is further configured to be electrically connected to the drive circuit on the circuit board 55.

During zero point detection of the electro-mechanical brake apparatus 100, when the brake motor 50 drives the brake caliper 30 and the second friction plate 212, the first-type pressure sensor 71a is configured to detect pressure applied to the second friction plate 212. The first-type pressure sensor 71a transmits a detection signal to the drive circuit, and the drive circuit adjusts the initial relative angle between the stator 52 and the rotor 53 of the brake motor 50 based on the detection signal.

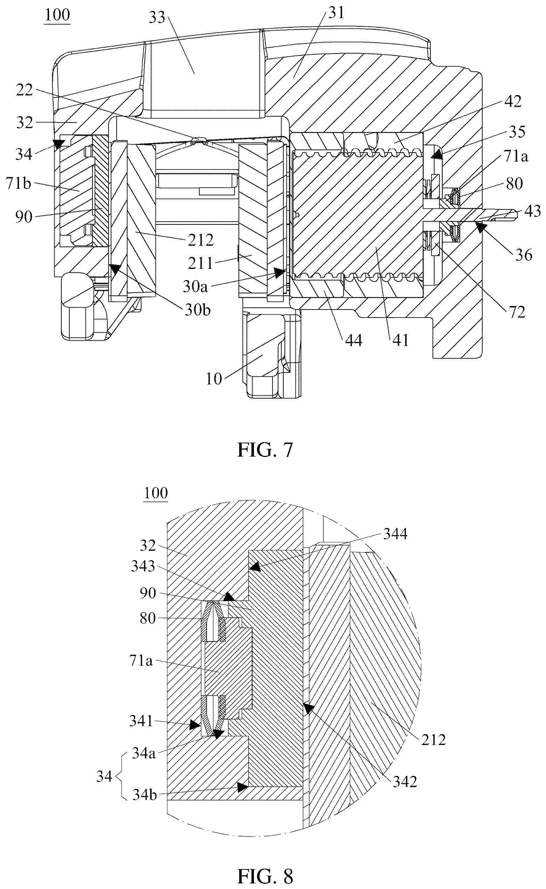

As shown in FIG. 7, the first caliper body 31 is configured to mount the first friction plate 211 and accommodate one first-type pressure sensor 71a. An axis of the first-type pressure sensor 71a coincides with the axis of the lead screw 41. Along the axial direction of the lead screw 41, the second friction plate 212, the first friction plate 211, the lead screw 41, and the first-type pressure sensor 71a are sequentially arranged. The first-type pressure sensor 71a is configured to detect, during zero point detection, pressure applied to the first friction plate 211.

Therefore, the first-type pressure sensor 71a may be mounted in the first caliper body 31 or the second caliper body 32. Correspondingly, the first-type pressure sensor 71a is configured to detect, during zero point detection, pressure applied to a friction plate 21 mounted in a same caliper body, to implement a detection function. In subsequent embodiments of this application, the case in which the first-type pressure sensor 71a is mounted in the second caliper body 32 is used for description.

In an embodiment, the second caliper body 32 is further configured to accommodate at least one elastic component 80, and each elastic component 80 is configured to buffer reverse pressure applied by the second friction plate 212 to one first-type pressure sensor 71a. Along the axial direction of the brake disc 1002, one elastic component 80 is arranged in a press-fitting manner on a side, facing the second caliper body 32 or the second friction plate 212, of one first-type pressure sensor 71a.

FIG. 8 is a diagram of a cross-sectional structure of internal components of the second caliper body 32 in the electro-mechanical brake apparatus 100 provided in this application. As shown in FIG. 8, the electro-mechanical brake apparatus 100 in this application further includes an elastic component 80, the second mounting surface 30b of the second caliper body 32 further includes a first accommodation groove 34, and the elastic component 80 is accommodated in the first accommodation groove 34. An axis of the elastic component 80 coincides with the axis of the lead screw 41. Along the axial direction of the lead screw 41, the elastic component 80 is configured to abut against a groove bottom 341 of the first accommodation groove 34 and the first-type pressure sensor 71a, to buffer reverse pressure applied by the second friction plate 212 to the first-type pressure sensor 71a during braking, and avoid possible damage caused by excessively large reverse pressure of the second friction plate 212 to the first-type pressure sensor 71a. In this way, the first-type pressure sensor 71a is protected.

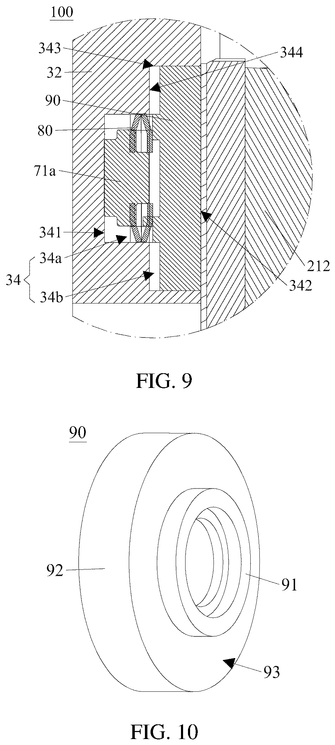

FIG. 9 is a diagram of a cross-sectional structure of internal components of the second caliper body 32 in the electro-mechanical brake apparatus 100 provided in this application. As shown in FIG. 9, the electro-mechanical brake apparatus 100 in this application further includes an elastic component 80, and an axis of the elastic component 80 coincides with the axis of the lead screw 41. Along the axial direction of the lead screw 41, one end of the elastic component 80 is configured to abut against a side, facing the second friction plate 212, of the first-type pressure sensor 71a, and the other end extends toward the second friction plate 212, to buffer reverse pressure applied by the second friction plate 212 to the first-type pressure sensor 71a during braking, and avoid possible damage caused by excessively large reverse pressure of the second friction plate 212 to the first-type pressure sensor 71a. In this way, the first-type pressure sensor 71a is protected.

In an embodiment, the second caliper body 32 includes a first accommodation groove 34 and a slider 90, and the first accommodation groove 34 is configured to accommodate one first-type pressure sensor 71a. The slider 90 is arranged between the first-type pressure sensor 71a and the second friction plate 212 along the axial direction of the brake disc 1002. A groove opening 342 of the accommodation groove 34 faces the second friction plate 212 and is configured to accommodate a part of the slider 90. The second friction plate 212 is configured to be fastened to another part of the slider 90.

To be specific, the second mounting surface 30b further includes the first accommodation groove 34, the first accommodation groove 34 is configured to accommodate the first-type pressure sensor 71a and one end of the slider 90, and the other end of the slider 90 is configured to fasten the second friction plate 212. The first-type pressure sensor 71a is arranged between the slider 90 and the groove bottom 341 of the first accommodation groove 34.

FIG. 10 is a diagram of an exterior structure of a slider 90 in the electro-mechanical brake apparatus 100 provided in this application. As shown in FIG. 10, the electro-mechanical brake apparatus 100 in this application further includes the slider 90, and an axis of the slider 90 coincides with the axis of the lead screw 41. Along the axial direction of the lead screw 41, one end of the slider 90 is accommodated in the first accommodation groove 34, and the other end is configured to fasten the second friction plate 212. To be specific, along the axial direction of the lead screw 41, the groove bottom 341 of the first accommodation groove 34, the first-type pressure sensor 71a, the slider 90, and the second friction plate 212 are sequentially arranged.

The slider 90 is configured to be slidably connected to the brake caliper 30 to implement a slidable connection between the second friction plate 212 and the brake caliper 30. It can be understood that, when a braking force transmitted to the lead screw 41 enables the brake caliper 30 to slide, the brake caliper 30 can push the second friction plate 212 to slide toward the brake disc 1002. In this case, the first-type pressure sensor 71a abutting between the groove bottom 341 of the first accommodation groove 34 and the slider 90 is configured to push the slider 90 and the second friction plate 212 to slide along with the brake caliper 30. The first-type pressure sensor 71a is configured to detect pressure applied by the electro-mechanical brake apparatus 100 to the second friction plate 212. After the second friction plate 212 is in contact with the brake disc 1002, two opposite ends of the second friction plate 212 respectively abut against the brake disc 1002 and the brake caliper 30. When a braking force further released by the brake motor 50 continues to increase friction between the second friction plate 212 and the brake disc 1002, reverse thrust applied to the second friction plate 212 increases, and the elastic component 80 is configured to buffer the reverse thrust.

In a process of canceling braking, as the brake motor 50 rotates reversely, the first friction plate 211 and the second friction plate 212 are subject to elastic forces from the separation spring 22 and the reset spring along the axial direction of the lead screw 41. For the second friction plate 212, the elastic forces from the separation spring 22 and the reset spring enable the second friction plate 212 to slide toward the first-type pressure sensor 71a through the slider 90 while moving away from the brake disc 1002, and be detected by the first-type pressure sensor 71a. In addition, in this application, the first-type pressure sensor 71a is disposed on a side, away from the brake motor 50, of the brake disc 1002, so that an axial size, on a side close to the brake motor 50, of the brake caliper 30 can be reduced. For the vehicle, a side, on which the brake motor 50 is disposed, of the brake caliper 30 of the electro-mechanical brake apparatus 100 is on an inner side of the axial direction of the wheel 1001. Therefore, it can be understood that wheel space of the vehicle can be properly utilized when the first-type pressure sensor 71a is disposed on a side, away from the brake motor 50, of the brake disc 1002.

In an embodiment, the second friction plate 212 is prepared by using a non-metal material. In an embodiment, the second friction plate 212 is prepared by using diamond. In an embodiment, both the slider 90 and the second friction plate 212 are prepared by using a metal material. In an embodiment, the slider 90 and the second friction plate 212 are made of a same material and are integrated.

In an embodiment, the first accommodation groove 34 includes a first section 34a and a second section 34b that are connected. Along the axial direction of the brake disc 1002, the first section 34a is arranged on a side, away from the second friction plate 212, of the second section 34b. The first section 34a is configured to accommodate one first-type pressure sensor 71a. Along a radial direction of the brake disc 1002, a size of the first section 34a is less than a size of the second section 34b and is less than a maximum width of the slider 90.

In an embodiment, an axis of the first accommodation groove 34 coincides with the axis of the lead screw 41. A size of the first section 34a of the first accommodation groove 34 is less than a size of the second section 34b of the first accommodation groove 34. Along the axial direction of the lead screw 41, an abutting surface 344 facing the second friction plate 212 is formed at a junction between the first section 34a and the second section 34b.

In this embodiment of this application, the slider 90 may slide in the second section 34b along the axial direction of the lead screw 41, and drive the second friction plate 212 to also slide along the axial direction of the lead screw 41. During braking of the electro-mechanical brake apparatus 100 in this application, axial thrust applied to the second friction plate 212 enables the slider 90 to slide toward the first-type pressure sensor 71a, and push the first-type pressure sensor 71a to slide toward the groove bottom 341 of the first accommodation groove 34. The abutting surface 344 may be configured to limit a distance by which the slider 90 slides toward the first-type pressure sensor 71a, and protect the first-type pressure sensor 71a, to prevent the first-type pressure sensor 71a from being subject to pressure beyond a bearing range of the first-type pressure sensor 71a.

In an embodiment, the slider 90 includes a third section 91 and a fourth section 92 that are connected. Both the third section 91 and the fourth section 92 are ring-shaped. Both an axis of the third section 91 and an axis of the fourth section 92 overlap the axis of the lead screw 41, and an outer diameter of the third section 91 is less than an outer diameter of the fourth section 92, so that a fitting surface 93 away from the second friction plate 212 is formed at a junction between the third section 91 and the fourth section 92 along the axial direction of the lead screw 41.

As shown in FIG. 8, along the axial direction of the lead screw 41, the third section 91 is farther away from the second friction plate 212 than the fourth section 92. The third section 91 is at least partially accommodated in the first section 34a of the first accommodation groove 34, and the fourth section 92 is at least partially accommodated in the second section 34b of the first accommodation groove 34.

In this embodiment, the electro-mechanical brake apparatus 100 in this application may limit displacement of the slider 90 toward the first section 34a through a fitting relationship between the fitting surface 93 of the slider 90 and the abutting surface 344, to ensure that data detected by the first-type pressure sensor 71a when the fitting surface 93 is in contact with the abutting surface 344 falls within the measurement scale of the first-type pressure sensor 71a. This avoids a case in which the first-type pressure sensor 71a exceeds the measurement scale due to excessive pressure applied to the second friction plate 212 during braking, and therefore protects the first-type pressure sensor 71a.

In an embodiment, the first accommodation groove 34 is further configured to at least partially accommodate one elastic component 80. Along the axial direction of the brake disc 1002, a length of the first accommodation groove 34 is less than a sum of a length of the first-type pressure sensor 71a and a natural length of the elastic component 80.

As shown in FIG. 8, an axis of the elastic component 80 coincides with the axis of the lead screw 41, and the elastic component 80 is accommodated in the first section 34a of the first accommodation groove 34. Along the axis of the lead screw 41, the elastic component 80 is configured to abut against the groove bottom 341 of the first accommodation groove 34 and the first-type pressure sensor 71a. When the elastic component 80 is in a state without being subject to axial pressure, the first-type pressure sensor 71a and the elastic component 80 that are arranged in a press-fitting manner may extend out of the first section 34a of the first accommodation groove 34, to ensure reliable contact between an end, away from the elastic component 80, of the first-type pressure sensor 71a and the slider 90, and ensure that the first-type pressure sensor 71a can detect pressure against the second friction plate 212.

During braking of the electro-mechanical brake apparatus 100 in this application, axial thrust applied to the second friction plate 212 enables the slider 90 to slide toward the first-type pressure sensor 71a, and push the first-type pressure sensor 71a to slide toward the groove bottom 341 of the first accommodation groove 34 to compress the elastic component 80. Along the axial direction of the lead screw 41, axial position limiting on the first-type pressure sensor 71a is implemented based on a support function provided by the elastic component 80 in cooperation with the slider 90, so that the first-type pressure sensor 71a can obtain pressure applied to the second friction plate 212.

After the elastic component 80 is subject to pressure transmitted by the slider 90, the slider 90 compresses the elastic component 80 to push the first-type pressure sensor 71a to retract into the first section 34a, to avoid higher pressure on the first-type pressure sensor 71a.

In an embodiment, when the slider 90 includes a third section 91, along the axial direction of the brake disc 1002, a length of the first accommodation groove 34 is less than a sum of a length of the first-type pressure sensor 71a, a length of the third section 91, and a natural length of the elastic component 80.

The size settings of the first accommodation groove 34, the first-type pressure sensor 71a, the elastic component 80, and the slider 90 in the foregoing embodiments are intended to ensure a slidable connection relationship between the slider 90 and the second caliper body 32 during use of the electro-mechanical brake apparatus 100 in this application in different embodiments respectively. This ensures a function of detecting, by the first-type pressure sensor 71a, pressure against the second friction plate 212 in this application.

In an embodiment, the electro-mechanical brake apparatus 100 includes two first-type pressure sensors 71a, and the two first-type pressure sensors 71a are mounted in a same caliper body. Along the axial direction of the brake disc 1002, the two first-type pressure sensors 71a are arranged between one caliper body and one friction plate at a spacing.

In an embodiment, the second mounting surface 30b includes two first accommodation grooves 34, and the two first accommodation grooves 34 are respectively configured to accommodate the two first-type pressure sensors 71a.

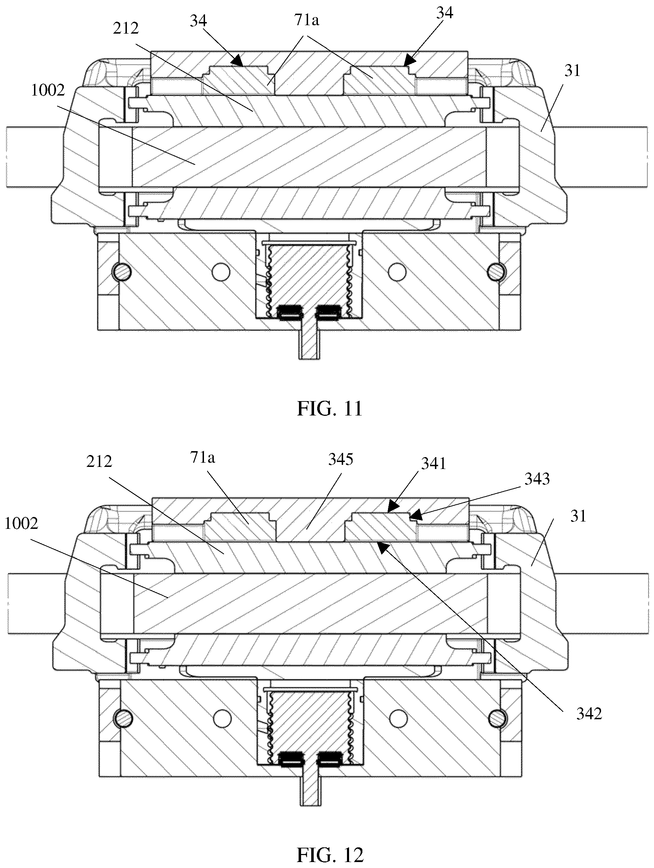

FIG. 11 is a locally enlarged diagram of a cross-sectional structure of internal components of the second caliper body 32 in the electro-mechanical brake apparatus 100 in this application. As shown in FIG. 11, the second mounting surface 30b includes two first accommodation grooves 34, and the two first accommodation grooves 34 are arranged along a radial direction of the brake disc 1002. There are two first-type pressure sensors 71a, and each first-type pressure sensor 71a is accommodated in one first accommodation groove 34. In an embodiment, as shown in FIG. 11, the slider 90 and the second friction plate 212 are of an integrated structure.

It can be understood that the two first accommodation grooves 34 respectively configured to accommodate the two first-type pressure sensors 71a are provided on the second mounting surface 30b, so that two first-type pressure sensors 71a with small measurement scales are disposed at a remote end of the brake caliper 30 relative to the brake motor 50, and the two first-type pressure sensors 71a can cooperate with each other to further improve zero point detection precision of the electro-mechanical brake apparatus 100 in this application.

In an embodiment, along an arrangement direction of the two first accommodation grooves 34 on the second mounting surface 30b, a spacing between the two first accommodation grooves 34 is greater than an outer diameter of the lead screw 41 and is less than a length of the second friction plate 212. In other words, along the arrangement direction of the two first accommodation grooves 34, the spacing between the two first accommodation grooves 34 is greater than the outer diameter of the lead screw 41 and is less than the length of the second friction plate 212.

A braking force of the brake motor 50 is transmitted to the friction plate 21 through cooperation between the lead screw 41 and the swivel nut 42. Therefore, to increase a contact area between the friction plate 21 and the brake disc 1002 during braking of the electro-mechanical brake apparatus 100, a length of the friction plate 21 is greater than the outer diameter of the lead screw 41 along a radial direction of the lead screw 41. It can be understood that, during operation of the electro-mechanical brake apparatus 100, unevenness of thrust may occur when the lead screw 41 pushes the friction plate 21.

In this embodiment, the two first accommodation grooves 34 are arranged at a spacing along a length direction of the friction plate 21, so that two second-type pressure sensors 71b accommodated in the two first accommodation grooves 34 can be respectively arranged on two sides of the lead screw 41 along the radial direction of the lead screw 41, to detect pressure against the second friction plate 212 in two areas that are spaced apart, and eliminate a possible deviation of detection data caused by a force applied to a single side of the second friction plate 212. This further improves zero point detection precision of the electro-mechanical brake apparatus 100 in this application.

In an embodiment, along the radial direction of the brake disc 1002, a spacing between the two first-type pressure sensors 71a is greater than an outer diameter of either of the first-type pressure sensors 71a.

As shown in FIG. 11, along the radial direction of the lead screw 41, the length of the second friction plate 212 is greater than the length of the first-type pressure sensor 71a. It can be understood that, along the radial direction of the lead screw 41, the spacing between the two first-type pressure sensors 71a is set to be greater than the outer diameter of the first-type pressure sensor 71a, so that the spacing between the two first-type pressure sensors 71a can be increased, and areas in which the two first-type pressure sensors 71a detect pressure against the second friction plate 212 are spaced apart. This further eliminates a possible deviation of detection data caused by a force applied to a single side of the second friction plate 212, and further improves zero point detection precision of the electro-mechanical brake apparatus 100 in this application.

In an embodiment, the two first-type pressure sensors 71a are symmetrically distributed around a center of the second friction plate 212.

Each first-type pressure sensor 71a abuts against a groove bottom 341 of a corresponding first accommodation groove 34 through the elastic component 80. Therefore, it can be understood that respectively arranging the two first-type pressure sensors 71a on two sides of the center of the second friction plate 212 along the radial direction of the brake disc 1002 can avoid radial displacement of the slider 90 caused by a force applied to a single side of the slider 90 when the second friction plate 212 pushes the slider 90. This further eliminates a possible deviation of detection data caused by a force applied to a single side of the second friction plate 212, and improves zero point detection precision of the electro-mechanical brake apparatus 100 in this application.

In an embodiment, the groove bottom 341 of the first accommodation groove 34 includes a protrusion 345, and the protrusion 345 extends from the groove bottom 341 of the first accommodation groove 34 toward the groove opening 342 of the first accommodation groove 34. An outer diameter of the protrusion 345 is less than or equal to an inner diameter of the first-type pressure sensor 71a.

FIG. 12 is a diagram of a cross-sectional structure of internal components of the second caliper body 32 in the electro-mechanical brake apparatus 100 provided in this application. As shown in FIG. 12, the first-type pressure sensor 71a is ring-shaped, and an axis of the first-type pressure sensor 71a coincides with the axis of the lead screw 41. Along the axial direction of the lead screw 41, the first-type pressure sensor 71a is arranged between the groove bottom 341 of the first accommodation groove 34 and the second friction plate 212.

An axis of the first accommodation groove 34 coincides with the axis of the lead screw 41. Along the axial direction of the lead screw 41, the protrusion 345 extends from the groove bottom 341 of the first accommodation groove 34 toward the groove opening 342 of the first accommodation groove 34, and an axis of the protrusion 345 coincides with the axis of the lead screw 41. The first-type pressure sensor 71a is sleeved on the protrusion 345 in the first accommodation groove 34, to facilitate radial positioning of the first-type pressure sensor 71a in the first accommodation groove 34.

In an embodiment, the first-type pressure sensor 71a is sleeved on the protrusion 345, a side of the first-type pressure sensor 71a directly abuts against the groove bottom 341 of the first accommodation groove 34, and the other side of the first-type pressure sensor 71a directly abuts against the slider 90. In an embodiment, as shown in FIG. 12, the slider 90 and the second friction plate 212 are of an integrated structure.

As shown in FIG. 12, an inner circumferential surface of the first-type pressure sensor 71a abuts against an outer circumferential surface of the protrusion 345. It can be understood that the first-type pressure sensor 71a implements radial positioning by abutting against the outer circumferential surface of the protrusion 345, to avoid displacement of the first-type pressure sensor 71a along the radial direction of the lead screw 41 under external impact. This ensures a relative position between an outer circumferential surface of the first-type pressure sensor 71a and a groove wall 343 of the first accommodation groove 34, and reduces impact of the external impact on detection data of the first-type pressure sensor 71a, so that detection precision of the first-type pressure sensor 71a is ensured.

In addition, the inner circumferential surface of the first-type pressure sensor 71a abuts against the outer circumferential surface of the protrusion 345, so that the inner diameter of the first-type pressure sensor 71a can be further reduced, to reduce a radial size of the first-type pressure sensor 71a. This facilitates miniaturization of the electro-mechanical brake apparatus 100 in this application.

In this embodiment of this application, along the axial direction of the lead screw 41, two sides of the first-type pressure sensor 71a respectively abut against the groove bottom 341 of the first accommodation groove 34 and the second friction plate 212, to implement axial positioning of the first-type pressure sensor 71a. An axial size of the first-type pressure sensor 71a in the caliper body is small. This helps reduce an overall axial size of the electro-mechanical brake apparatus 100, and facilitates arrangement of wheel space.

In an embodiment, along the axial direction of the lead screw 41, a length of the protrusion 345 is less than or equal to a thickness of the first-type pressure sensor 71a.

As shown in FIG. 12, the protrusion 345 is concave toward the groove bottom 341 of the first accommodation groove 34 relative to the first-type pressure sensor 71a. This prevents the protrusion 345 from abutting against the second friction plate 212 and affecting pressure detection of the first-type pressure sensor 71a, while implementing radial positioning of the first-type pressure sensor 71a. This ensures that the first-type pressure sensor 71a performs pressure detection on the second friction plate 212 in the electro-mechanical brake apparatus 100 in this application.

In an embodiment, the first-type pressure sensor 71a includes another axial protrusion, and the another axial protrusion is embedded into a groove bottom of the second accommodation groove along the axial direction of the lead screw 41. The axial protrusion of the first-type pressure sensor 71a is defined as a first axial protrusion 711a.

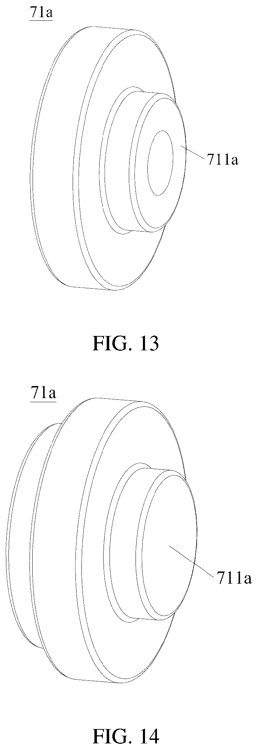

FIG. 13 is a diagram of an exterior structure of the first-type pressure sensor 71a in the electro-mechanical brake apparatus 100 provided in this application. FIG. 14 is a diagram of an exterior structure of the first-type pressure sensor 71a in the electro-mechanical brake apparatus 100 provided in this application according to an embodiment. The first-type pressure sensor 71a shown in FIG. 13 is a diagram of an exterior structure of the first-type pressure sensor 71a in FIG. 12. The first-type pressure sensor 71a shown in FIG. 14 is a diagram of an exterior structure of the first-type pressure sensor 71a shown in FIG. 8.

As shown in FIG. 13 and FIG. 14, the first axial protrusion 711a is provided on a side, away from the brake disc 1002, of the first-type pressure sensor 71a, and the first axial protrusion 711a is configured to be embedded into the groove bottom 341 of the first accommodation groove 34. An internal pressure detection component of the first-type pressure sensor 71a may be partially accommodated in an internal cavity of the first axial protrusion 711a. In other words, the first axial protrusion 711a may be configured to accommodate an internal component of the first-type pressure sensor 71a. With the first axial protrusion 711a, axial space occupied by the first-type pressure sensor 71a in the brake caliper 30 can be further reduced, to reduce an axial size of the brake caliper 30. This facilitates miniaturization of the electro-mechanical brake apparatus 100 in this application.

In an embodiment, one of the at least one caliper body is configured to mount one friction plate 21 and accommodate one second-type pressure sensor 71b. Along the axial direction of the brake disc 1002, the second-type pressure sensor 71b is arranged on a side, away from the brake disc 1002, of the friction plate 21. The second-type pressure sensor 71b is configured to detect pressure applied by the friction plate 21 to one side of the brake disc 1002.

In an embodiment, the first caliper body 31 is configured to mount the first friction plate 211 and accommodate one second-type pressure sensor 71b. An axis of the second-type pressure sensor 71b coincides with the axis of the lead screw 41. Along the axial direction of the lead screw 41, the second-type pressure sensor 71b is arranged on a side, away from the first friction plate 211, of the lead screw 41, and the second-type pressure sensor 71b is configured to detect, during braking, pressure applied by the first friction plate 211 to one side of the brake disc 1002. The second-type pressure sensor 71b is further configured to be electrically connected to the drive circuit of the circuit board 55.

During operation of the electro-mechanical brake apparatus 100, when a braking force output by the brake motor 50 is transmitted to the first friction plate 211 through the gearbox 60, the lead screw 41, and the swivel nut 42, the lead screw 41 can further transmit reverse thrust to the second-type pressure sensor 71b, and the reverse thrust is detected by the second-type pressure sensor 71b. The second-type pressure sensor 71b transmits a detection signal to the drive circuit, and the drive circuit adjusts an output torque of the brake motor 50 based on the detection signal.

In addition, during operation of the electro-mechanical brake apparatus 100, when the swivel nut 42 pushes the first friction plate 211 to slide toward the brake disc 1002, the separation spring 22 between the first friction plate 211 and the second friction plate 212 is axially compressed along the axial direction of the lead screw 41, the separation spring 22 applies axial thrust to the swivel nut 42, and the axial thrust prevents contact between the first friction plate 211 and the brake disc 1002. In this case, the second-type pressure sensor 71b can further detect an elastic force provided by the separation spring 22. The elastic force cooperates with the braking force transmitted by the lead screw 41 to implement detection on pressure applied to the first friction plate 211.

To be specific, the second-type pressure sensor 71b is disposed to detect, in real time, pressure applied by the first friction plate 211 to the brake disc 1002 during braking. This avoids a mismatch between a braking force output by the brake motor 50 and actual braking effect. This implements a braking force feedback function of the electro-mechanical brake apparatus 100 in this application, and ensures reliable braking of the electro-mechanical brake apparatus 100 in this application.

In an embodiment, the second caliper body 32 is configured to mount the second friction plate 212 and accommodate one second-type pressure sensor 71b. An axis of the second-type pressure sensor 71b coincides with the axis of the lead screw 41. Along the axial direction of the lead screw 41, the second-type pressure sensor 71b is arranged on a side, away from the first friction plate 211, of the second friction plate 212, and the second-type pressure sensor 71b is configured to detect, during braking, pressure applied by the second friction plate 212 to one side of the brake disc 1002.

The second-type pressure sensor 71b is further configured to be electrically connected to the drive circuit on the circuit board 55, to implement real-time detection of a braking process, and avoid a mismatch between a braking force output by the brake motor 50 and actual braking effect. This implements a power feedback function of the electro-mechanical brake apparatus 100 in this application, and ensures reliable braking of the electro-mechanical brake apparatus 100 in this application.

According to the foregoing two embodiments, the second-type pressure sensor 71b may be mounted in the first caliper body 31 or the second caliper body 32. Correspondingly, the second-type pressure sensor 71b is configured to detect pressure applied to a friction plate 21 mounted in a same caliper body during braking, to implement a braking force detection function during braking. In subsequent embodiments of this application, the case in which the second-type pressure sensor 71b is mounted in the first caliper body 31 is used for description.

In an embodiment, the electro-mechanical brake apparatus 100 includes a lead screw 41, the first caliper body 31 is configured to accommodate the lead screw 41 and one second-type pressure sensor 71b, and the lead screw 41 is configured to drive one first friction plate 211. Along the axial direction of the brake disc 1002, the lead screw 41 is arranged between one second friction plate 212 and the second-type pressure sensor 71b.

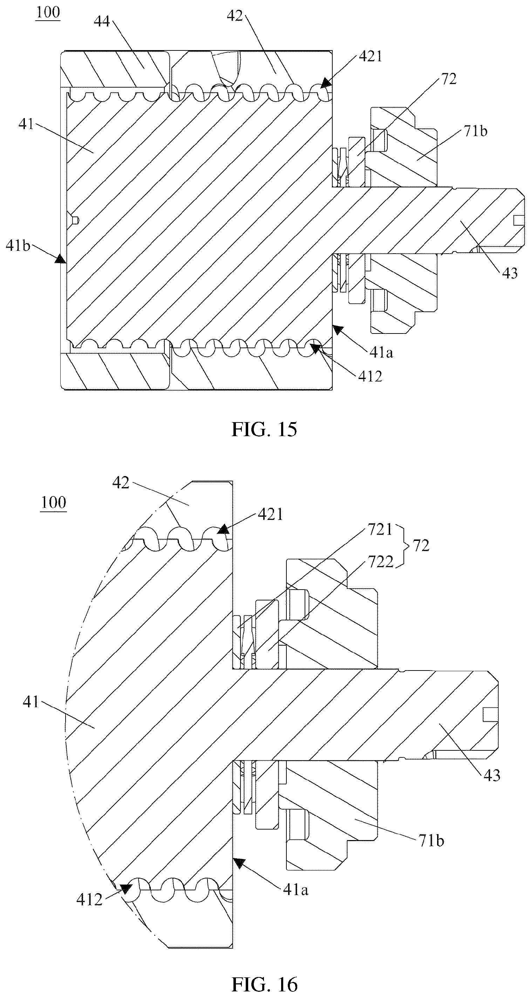

FIG. 15 is a diagram of a partial structure of internal components of the first caliper body 31 in the electro-mechanical brake apparatus 100 provided in this application. As shown in FIG. 15, an axis of the lead screw 41 is parallel to the axis of the brake disc 1002, and an axis of the second-type pressure sensor 71b coincides with the axis of the lead screw 41. Along an axial direction of the lead screw 41, the second friction plate 212, the first friction plate 211, the lead screw 41, and the second-type pressure sensor 71b are sequentially arranged. It can be understood that, during braking of the electro-mechanical brake apparatus 100 in this application, a braking force of the brake motor 50 is transmitted to the lead screw 41, and the lead screw 41 drives, based on the braking force of the brake motor 50, the first friction plate 211 to slide, and transmits, to the second-type pressure sensor 71b, pressure applied by the first friction plate 211 to the brake disc 1002. In this way, the second-type pressure sensor 71b can detect pressure applied by the first friction plate 211 to one side of the brake disc 1002 during braking.

In an embodiment, the first caliper body 31 is further configured to accommodate a thrust bearing 72. The thrust bearing 72 is arranged between a lead screw 41 and a second-type pressure sensor 71b along the axial direction of the brake disc 1002.

FIG. 16 is a locally enlarged diagram of a cross-sectional structure of internal components of the first caliper body 31 in the electro-mechanical brake apparatus 100 in this application. As shown in FIG. 16, the electro-mechanical brake apparatus 100 in this application further includes a thrust bearing 72. Both an axis of the thrust bearing 72 and an axis of the second-type pressure sensor 71b coincide with an axis of the lead screw 41. Along an axial direction of the lead screw 41, the thrust bearing 72 is arranged between an end face of the lead screw 41 and the second-type pressure sensor 71b. The thrust bearing 72 is configured to bear reverse thrust applied by the first friction plate 211 to the lead screw 41.

During braking of the electro-mechanical brake apparatus 100 in this application, when the first friction plate 211 slides toward the brake disc 1002 under the action of the lead screw 41 and the swivel nut 42, the separation spring 22 also applies reverse thrust to the first friction plate 211 based on a compression amount of the separation spring 22, and the reverse thrust acts on the thrust bearing 72. While bearing the reverse thrust, the thrust bearing 72 further transmits the reverse thrust to the second-type pressure sensor 71b, so that the second-type pressure sensor 71b can adjust an output torque of the brake motor 50.

In this embodiment, along the axial direction of the lead screw 41, one side of the thrust bearing 72 is configured to rotate in the brake caliper 30 along with the lead screw 41, and the other side of the thrust bearing 72 is stationary relative to the second-type pressure sensor 71b.

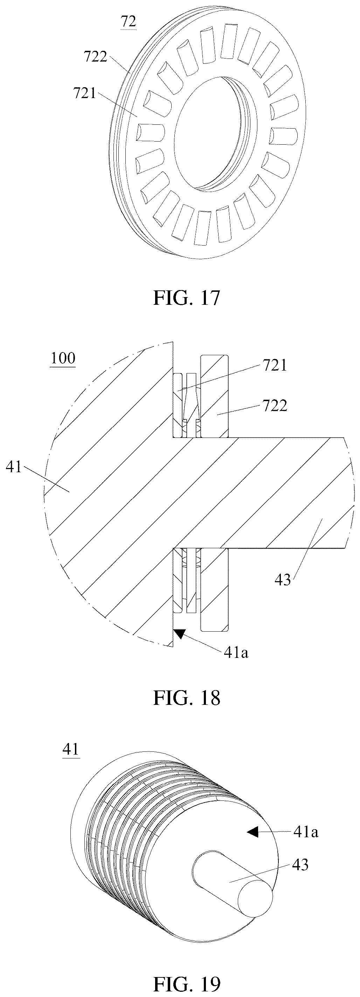

FIG. 17 is a diagram of an exterior structure of the thrust bearing 72 in the electro-mechanical brake apparatus 100 provided in this application. FIG. 18 is a diagram of a partial cross-sectional structure of internal components of the first caliper body 31 in the electro-mechanical brake apparatus 100 in this application.

As shown in FIG. 17 and FIG. 18, the thrust bearing 72 includes a first bearing ring 721 and a second bearing ring 722. Both an axis of the first bearing ring 721 and an axis of the second bearing ring 722 coincide with the axis of the lead screw 41. The first bearing ring 721 is rotatably connected to the second bearing ring 722. Along the axial direction of the lead screw 41, the first bearing ring 721 is farther away from the second-type pressure sensor 71b than the second bearing ring 722.

Along the axial direction of the lead screw 41, the first bearing ring 721 is configured to be fastened to the lead screw 41, and the second bearing ring 722 is configured to abut against a surface, away from the brake motor 50, of the second-type pressure sensor 71b. During operation of the brake motor 50, the lead screw 41 is driven by a braking force of the brake motor 50 to rotate relative to the brake caliper 30, and drives the first bearing ring 721 to rotate. In this case, the second bearing ring 722 remains stationary relative to the second-type pressure sensor 71b.

To be specific, the thrust bearing 72 is disposed to prevent a torque of the lead screw 41 from being transmitted to the second-type pressure sensor 71b and affecting detection data of the second-type pressure sensor 71b, while ensuring that axial thrust applied to the lead screw 41 is transmitted to the second-type pressure sensor 71b. This ensures that the second-type pressure sensor 71b remains relatively stationary during operation of the electro-mechanical brake apparatus 100 in this application.

In addition, the thrust bearing 72 is disposed, so that friction between the second-type pressure sensor 71b and the lead screw 41 is also reduced. This avoids friction loss of the second-type pressure sensor 71b, ensures service life of the second-type pressure sensor 71b, and improves detection precision of the second-type pressure sensor 71b in this application, so that braking precision of the electro-mechanical brake apparatus 100 in this application is improved.

In an embodiment, along the radial direction of the brake disc 1002, an outer diameter of the thrust bearing 72 is greater than an inner diameter of the second-type pressure sensor 71b, is less than the outer diameter of the lead screw 41, and is less than an outer diameter of the second-type pressure sensor 71b. The size settings of the thrust bearing 72 and the lead screw 41 avoid impact on a sliding stroke of the swivel nut 42 due to an excessively large outer diameter of the thrust bearing 72. This ensures a sliding stroke of the swivel nut 42 to push the friction plate 21, and ensures braking effect of the electro-mechanical brake apparatus 100 in this application.

In addition, the size settings of the thrust bearing 72 and the second-type pressure sensor 71b ensure that a projection of the thrust bearing 72 on the second-type pressure sensor 71b is accommodated in the second-type pressure sensor 71b along the axial direction of the lead screw 41. This ensures effect of the thrust bearing 72 abutting against the second-type pressure sensor 71b, and axial thrust applied to the lead screw 41 is reliably transmitted to the second-type pressure sensor 71b.

In an embodiment, the electro-mechanical brake apparatus 100 includes a transmission shaft 43. The transmission shaft 43 is configured to receive driving by the motor shaft 54 of the brake motor 50. The first caliper body 31 is configured to fasten the brake motor 50, and the transmission shaft 43 is configured to connect the lead screw 41 to the brake motor 50 in a transmission manner. The second-type pressure sensor 71b is arranged between the lead screw 41 and the brake motor 50 along the axial direction of the brake disc 1002.

FIG. 19 is a diagram of an exterior structure of the lead screw 41 in the electro-mechanical brake apparatus 100 provided in this application. As shown in FIG. 19, an axis of the transmission shaft 43 coincides with the axis of the lead screw 41. The transmission shaft 43 is configured to connect the brake motor 50 to the lead screw 41 in a transmission manner. Along the axial direction of the lead screw 41, one end of the transmission shaft 43 is configured to be fastened relative to the lead screw 41 along a circumferential direction of the lead screw 41, and the other end extends out of the first caliper body 31 and is connected to the motor shaft 54 of the brake motor 50 in a transmission manner. As shown in FIG. 3, the transmission shaft 43 extends into the housing 51 of the brake motor 50, and is in coaxial transmission with the drive shaft 63 of the gearbox 60. A braking force output by the motor shaft 54 of the brake motor 50 can be transmitted from the drive shaft 63 to the transmission shaft 43 through the gearbox 60, to drive the lead screw 41 to rotate.

In an embodiment, the electro-mechanical brake apparatus 100 includes a transmission shaft 43. The transmission shaft 43 is configured to receive driving by the motor shaft 54 of the brake motor 50. An end face, facing the brake motor 50 along the axial direction of the lead screw 41, of the lead screw 41 includes an inner spline, and the inner spline is configured to be coupled to an outer spline of the transmission shaft 43.

In an embodiment, along the radial direction of the brake disc 1002, one second-type pressure sensor 71b is sleeved on the transmission shaft 43. To be specific, the second-type pressure sensor 71b is configured to be sleeved on an outer circumferential surface of the transmission shaft 43 along the radial direction of the lead screw 41 and abut against the outer circumferential surface of the transmission shaft 43.

As shown in FIG. 15, the second-type pressure sensor 71b is ring-shaped. A geometric axis of the second-type pressure sensor 71b coincides with the axis of the lead screw 41. It can be understood that an inner circumferential surface of the second-type pressure sensor 71b implements radial positioning by abutting against the outer circumferential surface of the transmission shaft 43, to avoid displacement of the second-type pressure sensor 71b along the radial direction of the lead screw 41 under external impact. This ensures a relative position between an outer circumferential surface of the second-type pressure sensor 71b and a groove wall 353 of the groove 35 on the brake caliper 30, and reduces impact of the external impact on detection data of the second-type pressure sensor 71b, so that detection precision of the second-type pressure sensor 71b is ensured.

In addition, the inner circumferential surface of the second-type pressure sensor 71b abuts against the outer circumferential surface of the transmission shaft 43, so that a radial size of the second-type pressure sensor 71b can be further reduced. This facilitates miniaturization of the electro-mechanical brake apparatus 100 in this application.

In an embodiment, the brake caliper 30 includes a groove 35 and a through hole 36. The groove 35 is configured to accommodate a lead screw 41, a swivel nut 42, and a second-type pressure sensor 71b. The through hole 36 penetrates a groove bottom 351 of the groove 35 along an axial direction of the lead screw 41. The through hole 36 is configured to allow a transmission shaft 43 to pass.

FIG. 20 is a diagram of a partial cross-sectional structure of the first caliper body 31 in the electro-mechanical brake apparatus 100 provided in this application. As shown in FIG. 20, the groove 35 is provided on the first mounting surface 30a of the brake caliper 30, the groove 35 extends toward the brake motor 50 along the axial direction of the lead screw 41, and an axis of the groove 35 coincides with the axis of the lead screw 41. One end of the through hole 36 is configured to be in communication with the groove 35, and the other end is configured to extend toward the brake motor 50 along the axial direction of the lead screw 41. The through hole 36 penetrates the brake caliper 30, and an axis of the through hole 36 coincides with the axis of the lead screw 41. To be specific, a groove opening 352 of the groove 35 is away from the brake motor 50 along the axial direction of the lead screw 41, and the through hole 36 is provided at the groove bottom 351 of the groove 35.

The groove 35 is configured to accommodate the lead screw 41, and one end of the transmission shaft 43 is located outside the groove 35 and is configured to be connected to the brake motor 50 in a transmission manner. The other end of the transmission shaft 43 extends into the groove 35 through the through hole 36 along the axial direction of the lead screw 41, and is configured to be fastened to the lead screw 41 accommodated in the groove 35. To be specific, the transmission shaft 43 is configured to connect the lead screw 41 to the brake motor 50 in a transmission manner through the through hole 36, so that a braking force of the brake motor 50 can be transmitted to the lead screw 41 in the groove 35 through the transmission shaft 43, to ensure a braking function of the electro-mechanical brake apparatus 100 in this application.

In an embodiment, along a radial direction of the lead screw 41, a hole diameter of the through hole 36 is greater than or equal to an outer diameter of the transmission shaft 43 and is less than an outer diameter of the second-type pressure sensor 71b. An axis of the transmission shaft 43 coincides with the axis of the lead screw 41. It can be understood that providing a through hole 36 whose hole diameter is greater than or equal to the outer diameter of the transmission shaft 43 can ensure that the transmission shaft 43 can extend into the groove 35 through the through hole 36 along the axial direction of the lead screw 41. This ensures a transmission connection between the lead screw 41 and the brake motor 50 through the transmission shaft 43, and ensures a braking function of the electro-mechanical brake apparatus 100 in this application. An inner diameter of the second-type pressure sensor 71b may be equal to the outer diameter of the transmission shaft 43. An inner hole wall of the second-type pressure sensor 71b is configured to abut against an outer circumferential surface of the transmission shaft 43. The second-type pressure sensor 71b is configured to implement radial positioning through the transmission shaft 43.

In addition, the groove 35 is further configured to accommodate the second-type pressure sensor 71b, and along the axial direction of the lead screw 41, the second-type pressure sensor 71b abuts against the groove bottom 351 of the groove 35. The through hole 36 is provided at the groove bottom 351 of the groove 35. It can be understood that providing a through hole 36 whose hole diameter is less than the outer diameter of the second-type pressure sensor 71b can ensure that the second-type pressure sensor 71b abuts against the groove bottom 351 of the groove 35, to limit axial displacement of the second-type pressure sensor 71b, so that axial thrust transmitted from the lead screw 41 to the second-type pressure sensor 71b can be carried by the groove bottom 351 of the groove 35. This ensures precision of detecting axial thrust of the lead screw 41 by the second-type pressure sensor 71b.

In an embodiment, the first end face 41a includes a second accommodation groove 411, and the brake caliper 30 is further configured to accommodate another part of a second-type pressure sensor 71b. Along the radial direction of the lead screw 41, an inner diameter of a groove opening 4111 of the second accommodation groove 411 is greater than an inner diameter of the second-type pressure sensor 71b.

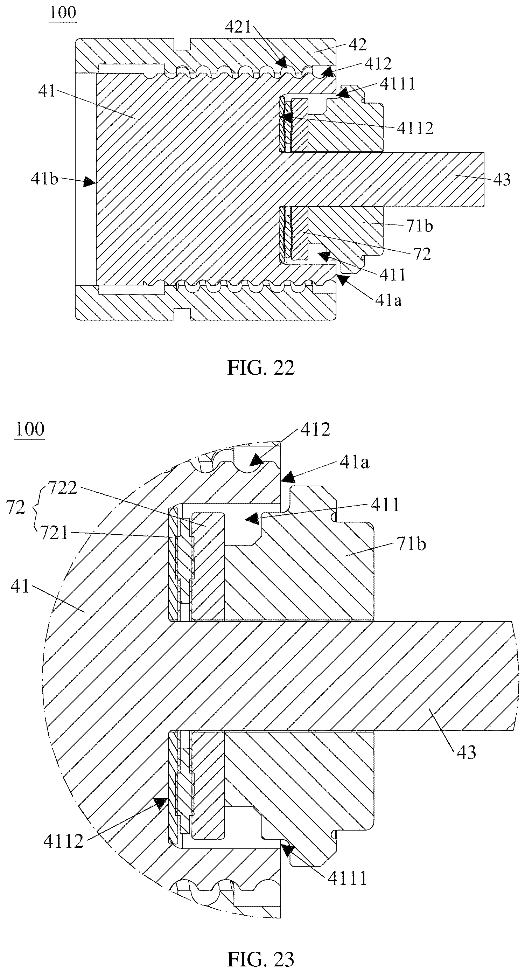

FIG. 21 is a diagram of a cross-sectional structure of the electro-mechanical brake apparatus 100 provided in this application. FIG. 22 is a diagram of a partial cross-sectional structure of internal components of the first caliper body 31 in the electro-mechanical brake apparatus 100 provided in this application. As shown in FIG. 21 and FIG. 22, the axis of the second-type pressure sensor 71b coincides with the axis of the lead screw 41. The first caliper body 31 of the brake caliper 30 is configured to accommodate both the lead screw 41 and the second-type pressure sensor 71b. Along the axial direction of the lead screw 41, the second-type pressure sensor 71b partially extends into the second accommodation groove 411 of the lead screw 41. The groove opening 4111 of the second accommodation groove 411 faces the brake motor 50 along the axial direction of the lead screw 41. The inner diameter of the groove opening 4111 of the second accommodation groove 411 is greater than an outer diameter of the second-type pressure sensor 71b, so that the second-type pressure sensor 71b can be partially accommodated in the second accommodation groove 411.

It can be understood that the second-type pressure sensor 71b can partially extend into the second accommodation groove 411, so that a part of the second-type pressure sensor 71b that extends into the second accommodation groove 411, the lead screw 41, and the brake caliper 30 are sequentially arranged in a sleeved manner along the radial direction of the lead screw 41. This reduces axial space occupied by the second-type pressure sensor 71b in the brake caliper 30, and therefore reduces an axial size of the brake caliper 30.

In this embodiment, the second-type pressure sensor 71b is accommodated in the second accommodation groove 411, and the second-type pressure sensor 71b is sleeved on an outer edge of the transmission shaft 43. It can be understood that an end part of the transmission shaft 43 is fastened to a groove bottom 4112 of the second accommodation groove 411, so that the second accommodation groove 411 is also configured to accommodate a part of the transmission shaft 43. This reduces axial space occupied by the transmission shaft 43 in the brake caliper 30, and reduces an axial size of the electro-mechanical brake apparatus 100, so that the electro-mechanical brake apparatus 100 in this application has a compact structure. This facilitates miniaturization of the electro-mechanical brake apparatus 100 in this application.

In an embodiment, the second accommodation groove 411 is further configured to accommodate a thrust bearing 72. The thrust bearing 72 is arranged between the groove bottom 4112 of the second accommodation groove 411 and the second-type pressure sensor 71b along the axial direction of the lead screw 41.

FIG. 23 is a locally enlarged diagram of a cross-sectional structure of internal components of the first caliper body 31 in the electro-mechanical brake apparatus 100 in this application. As shown in FIG. 21 to FIG. 23, along the axial direction of the lead screw 41, the thrust bearing 72 is arranged between the groove bottom 4112 of the second accommodation groove 411 and the second-type pressure sensor 71b. The thrust bearing 72 is configured to bear reverse thrust applied by the first friction plate 211 to the lead screw 41, and reduce friction between the lead screw 41 and the second-type pressure sensor 71b. During braking of the electro-mechanical brake apparatus 100 in this application, reverse thrust applied by the first friction plate 211 to the lead screw 41 is applied to the thrust bearing 72. While bearing the reverse thrust, the thrust bearing 72 further transmits the reverse thrust to the second-type pressure sensor 71b, so that the second-type pressure sensor 71b can adjust an output torque of the brake motor 50.

In an embodiment, along the radial direction of the lead screw 41, an inner diameter of the second accommodation groove 411 is greater than an outer diameter of the thrust bearing 72, to avoid a possibility of contact between a first bearing ring 721 of the thrust bearing 72 and a groove wall of the second accommodation groove 411 during rotation along with the lead screw 41. This ensures stable operation of the thrust bearing 72, and improves operation stability of the electro-mechanical brake apparatus 100 in this application.

In an embodiment, along the axial direction of the lead screw 41, a length of the second accommodation groove 411 is less than a sum of a length of the thrust bearing 72 and a length of the second-type pressure sensor 71b.

As shown in FIG. 21 to FIG. 23, along the axial direction of the lead screw 41, the thrust bearing 72 and the second-type pressure sensor 71b are arranged in a press-fitting manner. It can be understood that the setting of the length of the second accommodation groove 411 along the axial direction of the lead screw 41 enables an end, away from the thrust bearing 72, of the second-type pressure sensor 71b to extend out of the second accommodation groove 411 and abut against the first caliper body 31. In this way, when the lead screw 41 and the swivel nut 42 cooperate to drive the brake caliper 30 to slide, the second-type pressure sensor 71b can detect pressure against the first friction plate 211 during braking.

To be specific, along the axial direction of the lead screw 41, the second-type pressure sensor 71b abuts between the thrust bearing 72 and the brake caliper 30, so that the second-type pressure sensor 71b can detect pressure applied to the first friction plate 211 during braking, and feed back the pressure to the brake motor 50 to adjust an output torque of the brake motor 50. This further ensures reliable braking of the electro-mechanical brake apparatus 100 in this application.

In an embodiment, the brake caliper 30 is further configured to accommodate a swivel nut 42, a lead screw 41 is configured to drive the swivel nut 42 to move along an axial direction of the lead screw 41, and a spiral groove 412 of the lead screw 41 is configured to be meshed with a spiral groove 421 of the swivel nut 42.

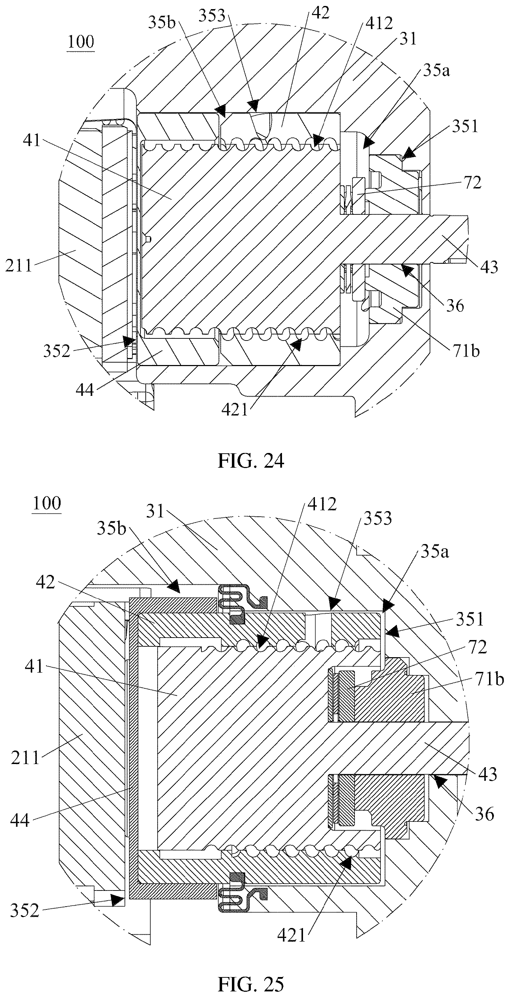

FIG. 24 is a diagram of a partial cross-sectional structure of internal components of the first caliper body 31 in the electro-mechanical brake apparatus 100 provided in this application. FIG. 25 is a diagram of a partial cross-sectional structure of internal components of the first caliper body 31 in the electro-mechanical brake apparatus 100 provided in this application. As shown in FIG. 24 and FIG. 25, an axis of the swivel nut 42 coincides with an axis of the lead screw 41, and the swivel nut 42 is configured to be coaxially sleeved on the lead screw 41. An inner circumferential surface of the swivel nut 42 is provided with the spiral groove 421, and an outer circumferential surface of the lead screw 41 is provided with the spiral groove 412. The spiral groove 421 on the inner circumferential surface of the swivel nut 42 is meshed with the spiral groove 412 on the outer circumferential surface of the lead screw 41, to convert rotational movement of the lead screw 41 driven by the brake motor 50 into displacement of the swivel nut 42 along the axial direction of the lead screw 41, so that the swivel nut 42 can drive the first friction plate 211 to slide along the axial direction of the lead screw 41.

During braking of the electro-mechanical brake apparatus 100, after the swivel nut 42 drives the first friction plate 211 to abut against the brake disc 1002, the swivel nut 42 and the lead screw 41 can also cooperate with each other to convert rotational movement of the lead screw 41 driven by the brake motor 50 into sliding of the brake caliper 30 driven by the swivel nut 42 along the axial direction of the lead screw 41, so that the second friction plate 212 slides along the axial direction of the lead screw 41. That is, the swivel nut 42 and the lead screw 41 cooperate with each other to implement a braking function of the electro-mechanical brake apparatus 100 in this application.

In an embodiment, along an axial direction of a lead screw 41, a length of a second accommodation groove 411 is less than a length of a spiral groove 412 of the lead screw 41, and a sum of the length of the spiral groove 412 of the lead screw 41 and the length of the second accommodation groove 411 is greater than a length of the lead screw 41. That is, along the axial direction of the lead screw 41, the spiral groove 412 and the second accommodation groove 411 of the lead screw 41 at least partially overlap.

It can be understood that the length settings of the second accommodation groove 411 and the spiral groove 412 of the lead screw 41 along the axial direction of the lead screw 41 enable the spiral groove 412 to be also provided on a part of an outer circumferential surface of the lead screw 41 on which the second accommodation groove 411 is provided. This ensures a length of the spiral groove 412 of the lead screw 41 on the outer circumferential surface of the lead screw 41 along the axial direction of the lead screw 41, and ensures a length of meshing between the lead screw 41 and the swivel nut 42 along the axial direction of the lead screw 41. In this way, the electro-mechanical brake apparatus in this application can reliably transmit a braking force.

In addition, the second accommodation groove 411 is configured to accommodate a part of a second-type pressure sensor 71b. Based on this, it can be understood that, that the spiral groove 412 is also provided on a part of the outer circumferential surface of the lead screw 41 on which the second accommodation groove 411 is provided can reduce impact of the second-type pressure sensor 71b on an axial size of the lead screw 41, to reduce an axial size of the brake caliper 30, so that the electro-mechanical brake apparatus 100 in this application has a compact structure. This facilitates miniaturization of the electro-mechanical brake apparatus 100 in this application.

In an embodiment, along a radial direction of a lead screw 41, an outer diameter of the lead screw 41 is greater than an outer diameter of a second-type pressure sensor 71b.

When the lead screw 41 rotates relative to the brake caliper 30, the swivel nut 42 may slide toward the brake motor 50 along an axial direction of the lead screw 41, and a part of a spiral groove 421 of the swivel nut 42 slides out of the spiral groove 412 of the lead screw 41. It can be understood that the outer diameter settings of the lead screw 41 and the second-type pressure sensor 71b can prevent the second-type pressure sensor 71b from affecting axial sliding of the swivel nut 42, to ensure a length of meshing between the lead screw 41 and the swivel nut 42 along the axial direction of the lead screw 41. In this way, the electro-mechanical brake apparatus in this application can reliably transmit a braking force.

In an embodiment, along an axial direction of a lead screw 41, one side of a second-type pressure sensor 71b directly abuts against a groove bottom 351 of a groove 35, and the other side of the second-type pressure sensor 71b abuts against a groove bottom 4112 of a second accommodation groove 411 through a thrust bearing 72.

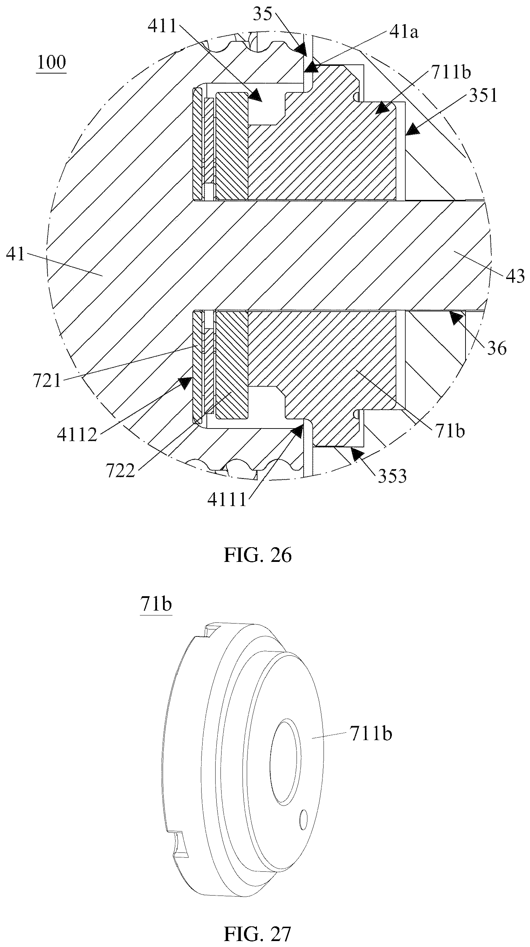

FIG. 26 is a locally enlarged diagram of a cross-sectional structure of internal components of the first caliper body 31 in the electro-mechanical brake apparatus 100 in this application. As shown in FIG. 26, along the axial direction of the lead screw 41, two sides of the second-type pressure sensor 71b respectively abut against the thrust bearing 72 and the groove bottom 351 of the groove 35, to implement axial positioning of the second-type pressure sensor 71b. An axial size of the second-type pressure sensor 71b in the caliper body is small. This helps reduce an overall axial size of the electro-mechanical brake apparatus 100, and facilitates arrangement of wheel space.

In an embodiment, the second-type pressure sensor 71b includes an axial protrusion, and the axial protrusion is embedded into a groove bottom 351 of a groove 35 along an axial direction of a lead screw 41. An axial protrusion of the second-type pressure sensor 71b is defined as a second axial protrusion 711b.

FIG. 27 is a diagram of an exterior structure of the second-type pressure sensor 71b in the electro-mechanical brake apparatus 100 provided in this application. As shown in FIG. 26 and FIG. 27, the second axial protrusion 711b is provided on a side, facing the brake motor 50, of the second-type pressure sensor 71b. The second axial protrusion 711b is configured to be embedded into the groove bottom 351 of the groove 35. An internal pressure detection component of the second-type pressure sensor 71b may be partially accommodated in an internal cavity of the second axial protrusion 711b. In other words, the second axial protrusion 711b may be configured to accommodate an internal component of the second-type pressure sensor 71b. With the second axial protrusion 711b, axial space occupied by the second-type pressure sensor 71b in the brake caliper 30 can be further reduced, to reduce an axial size of the brake caliper 30. This facilitates miniaturization of the electro-mechanical brake apparatus 100 in this application.

In an embodiment, a groove 35 includes two connected sections along an axial direction of a lead screw 41, and a distance between one section and any mounting surface is greater than a distance between the other section and the any mounting surface. Along a radial direction of the lead screw 41, a diameter of the other section is less than a diameter of an outer circumferential surface of the lead screw 41 and is greater than an outer diameter of a second-type pressure sensor 71b.

For ease of description, a section of the groove 35 that has a larger distance from the first mounting surface 30a is defined as a fifth section 35a, and a section of the groove 35 that has a smaller distance from the first mounting surface 30a is defined as a sixth section 35b.

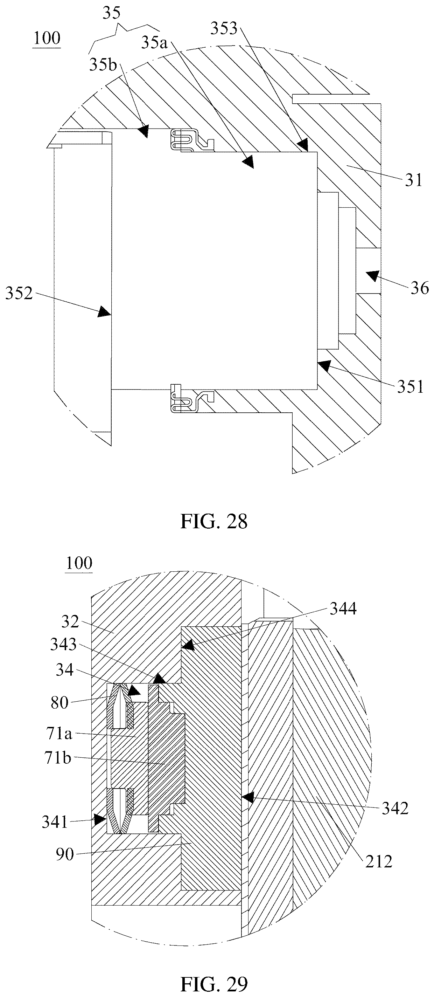

FIG. 28 is a diagram of a partial cross-sectional structure of internal components of the brake caliper 30 in the electro-mechanical brake apparatus 100 provided in this application. Further, refer to FIG. 26. FIG. 28 is a diagram of a partial cross-sectional structure in which some internal components of the groove 35 in FIG. 26 are omitted. As shown in FIG. 26 and FIG. 28, along the axial direction of the lead screw 41, a groove bottom 351 of the groove 35 is provided in the fifth section 35a, and a groove opening 352 of the groove 35 is provided in the sixth section 35b. Both an axis of the fifth section 35a and an axis of the sixth section 35b coincide with an axis of the lead screw 41. Along the radial direction of the lead screw 41, an outer diameter of the lead screw 41 is greater than the outer diameter of the second-type pressure sensor 71b, and the sixth section 35b is configured to accommodate the second-type pressure sensor 71b.

It can be understood that the size settings of the fifth section 35a and the sixth section 35b reduce an inner diameter size of the sixth section 35b along the radial direction of the lead screw 41. In this way, a thickness of an inner wall of a partial structure of the brake caliper 30 that is used to accommodate the second-type pressure sensor 71b is large, so that structural strength of the brake caliper 30 is improved. In addition, the inner diameter size of the sixth section 35b is reduced, so that a radial size of the first caliper body 31 at a position of the sixth section 35b is also correspondingly reduced. This facilitates miniaturization of the electro-mechanical brake apparatus 100 in this application.

In an embodiment, the electro-mechanical brake apparatus 100 in this application includes two pressure sensors. The first end face 41a includes a second accommodation groove 411, and the second mounting surface 30b includes a first accommodation groove 34. The second accommodation groove 411 on the first end face 41a is configured to accommodate one pressure sensor, and the pressure sensor is configured to detect pressure against the first friction plate 211 during braking. The first accommodation groove 34 on the second mounting surface 30b is configured to accommodate another pressure sensor, and the another pressure sensor is configured to detect pressure against the second friction plate 212 during braking.

In an embodiment, the brake caliper 30 includes two caliper bodies, and the two caliper bodies are arranged on two sides of a brake disc 1002 along an axial direction of the brake disc 1002. The first caliper body 31 is configured to mount the first friction plate 211 and one second-type pressure sensor 71b. The second caliper body 32 is configured to mount the second friction plate 212 and at least one first-type pressure sensor 71a.

As shown in FIG. 21, the first end face 41a includes a second accommodation groove 411, and the second mounting surface 30b includes a first accommodation groove 34. The second accommodation groove 411 is configured to accommodate a second-type pressure sensor 71b, and the second-type pressure sensor 71b is configured to detect pressure against the first friction plate 211 during braking. The first accommodation groove 34 is configured to accommodate a first-type pressure sensor 71a, and the first-type pressure sensor 71a is configured to detect pressure against the second friction plate 212 during zero point detection.

As shown in FIG. 21, the second accommodation groove 411 is located at a near end of the brake caliper 30 relative to the brake motor 50. It can be understood that, the second-type pressure sensor 71b is partially accommodated in the second accommodation groove 411, so that space occupied by the second-type pressure sensor 71b along the axial direction of the lead screw 41 can be reduced, to reduce an axial size at the near end of the brake caliper 30 relative to the brake motor 50. In this way, an axial size, on a side close to the brake motor 50, of the electro-mechanical brake apparatus 100 in this application is reduced, and the electro-mechanical brake apparatus 100 in this application has a compact structure. This facilitates miniaturization of the electro-mechanical brake apparatus 100 in this application.

In this embodiment, the first accommodation groove 34 is located at a remote end of the brake caliper relative to the brake motor 50. It can be understood that the first-type pressure sensor 71a is partially accommodated in the first accommodation groove 34, so that space occupied by the first-type pressure sensor 71a along the axial direction of the lead screw 41 can be reduced, to reduce an axial size at the remote end of the brake caliper 30 relative to the brake motor 50. In this way, an axial size, on a side close to the brake motor 50, of the electro-mechanical brake apparatus 100 in this application is reduced, and the electro-mechanical brake apparatus 100 in this application has a compact structure. This facilitates miniaturization of the electro-mechanical brake apparatus 100 in this application.

Therefore, in this application, the second-type pressure sensor 71b is partially accommodated in the second accommodation groove 411, and the first-type pressure sensor 71a is partially accommodated in the first accommodation groove 34, so that space occupied by the first-type pressure sensor 71a and the second-type pressure sensor 71b along the axial direction of the lead screw 41 is reduced, and an axial size of the brake caliper 30 in this application is reduced. In this way, an axial size of the electro-mechanical brake apparatus 100 in this application is reduced, and the electro-mechanical brake apparatus 100 in this application has a compact structure. This facilitates miniaturization of the electro-mechanical brake apparatus 100 in this application.

In addition, the first-type pressure sensor 71a and the second-type pressure sensor 71b are disposed to detect, in real time, pressure applied to the two friction plates 21 during braking. This avoids a mismatch between a braking force output by the brake motor 50 and pressure applied by the friction plate 21 to the brake disc 1002. This implements a power feedback function of the electro-mechanical brake apparatus 100 in this application, and further ensures reliable braking of the electro-mechanical brake apparatus 100 in this application.

In this embodiment of this application, compared with a solution in the conventional technology in which one pressure sensor is used to ensure reliable braking of an electro-mechanical brake apparatus, in the electro-mechanical brake apparatus 100 in this application, at least two pressure sensors are used, so that data detected by the pressure sensors is used for cross reference, to reduce impact of a measurement error of a pressure sensor on a detection result, and improve accuracy of detecting pressure against a corresponding friction plate 21 by the pressure sensors. This improves precision of controlling, by the electro-mechanical brake apparatus 100 in this application, a braking force output by the brake motor 50, and further improves braking reliability of the electro-mechanical brake apparatus 100 in this application.

In the electro-mechanical brake apparatus 100 in this application, one friction plate 21 and one type of pressure sensor are mounted in each caliper body, so that the electro-mechanical brake apparatus 100 in this application has a simple structure, facilitating manufacturing.

Therefore, based on the descriptions of the foregoing embodiments, in the electro-mechanical brake apparatus 100 in this application, the spiral groove 412 of the lead screw 41 and the spiral groove 421 of the swivel nut 42 cooperate with each other, so that a braking force output by the brake motor 50 can be transmitted to the lead screw 41 through the gearbox 60, to enable the lead screw 41 to rotate and the swivel nut 42 to axially slide. In addition, the braking force is transmitted to the two friction plates 21 through axial sliding of the swivel nut 42, so that the two friction plates 21 slide toward the brake disc 1002 and clamp the brake disc 1002. In this way, a braking function of the electro-mechanical brake apparatus 100 in this application is implemented.

In the electro-mechanical brake apparatus 100 in this application, the first-type pressure sensor 71a and the second-type pressure sensor 71b are further disposed to respectively detect braking forces applied to the first friction plate 211 and the second friction plate 212 during braking, so that the first-type pressure sensor 71a with a small measurement scale can be used for zero point detection of the electro-mechanical brake apparatus 100 in this application, to ensure detection precision.

To be specific, in the electro-mechanical brake apparatus 100 in this application, the first-type pressure sensor 71a and the second-type pressure sensor 71b with different measurement scales operate cooperatively, so that both detection precision during zero point detection and a detection scale during entire braking can be considered, to improve braking force control precision of the electro-mechanical brake apparatus 100. This ensures reliable braking of the electro-mechanical brake apparatus 100 in this application.

In addition, in the electro-mechanical brake apparatus 100 in this application, the second accommodation groove 411 is further provided on the first end face 41a of the lead screw 41, the first accommodation groove 34 is provided on the first mounting surface 30a of the brake caliper 30, the second-type pressure sensor 71b is partially accommodated in the second accommodation groove 411, and the first-type pressure sensor 71a is accommodated in the first accommodation groove 34, to reduce the axial size of the electro-mechanical brake apparatus 100. This facilitates miniaturization of the electro-mechanical brake apparatus 100, so that the electro-mechanical brake apparatus 100 in this application has a compact structure.

In the electro-mechanical brake apparatus 100 in this application, the second-type pressure sensor 71b is accommodated in the second accommodation groove 411, and the first-type pressure sensor 71a is accommodated in the first accommodation groove 34, so that the axial size of the electro-mechanical brake apparatus 100 in this application is reduced, and a structure is compact. When the electro-mechanical brake apparatus 100 in this application is used in a vehicle, the electro-mechanical brake apparatus 100 in this application can output a braking force through the brake motor 50, and the braking force is applied to a brake disc 1002 through the gearbox 60, the lead screw 41, the swivel nut 42, the brake caliper 30, and the friction plate 21, to implement a braking function of the vehicle. The first-type pressure sensor 71a and the second-type pressure sensor 71b in the electro-mechanical brake apparatus 100 cooperate with each other to provide braking force control precision of the electro-mechanical brake apparatus 100, so that the vehicle has better braking effect and longer service life. In addition, the electro-mechanical brake apparatus 100 has a compact structure. This facilitates miniaturization to adapt to wheel space of the vehicle, facilitates arrangement of internal components near a wheel 1001 of the vehicle, and helps control an overall size of the vehicle.

In the foregoing embodiments of this application, the first-type pressure sensor 71a and the second-type pressure sensor 71b are respectively arranged on two sides of the brake disc 1002 along an axial direction of the lead screw 41, to respectively detect pressure against the first friction plate 211 and the second friction plate 212. In an embodiment, the first-type pressure sensor 71a and the second-type pressure sensor 71b are located on a same side of the brake disc 1002 along an axial direction of the lead screw 41.

In an embodiment, one of at least one caliper body is configured to mount one friction plate 21 and accommodate one first-type pressure sensor 71a and one second-type pressure sensor 71b. Along the axial direction of the brake disc 1002, the second-type pressure sensor 71b is arranged between the friction plate 21 and the first-type pressure sensor 71a.

FIG. 29 is a diagram of a cross-sectional structure of internal components of the first caliper body 31 in the electro-mechanical brake apparatus 100 provided in this application. As shown in FIG. 29, both the first-type pressure sensor 71a and the second-type pressure sensor 71b are mounted in the second caliper body 32, and are accommodated in the first accommodation groove 34. Both an axis of the first-type pressure sensor 71a and an axis of the second-type pressure sensor 71b coincide with the axis of the lead screw 41. Along the axial direction of the lead screw 41, the groove bottom 341 of the first accommodation groove 34, the first-type pressure sensor 71a, the second-type pressure sensor 71b, the slider 90, the second friction plate 212, and the first friction plate 211 are sequentially arranged. Both the first-type pressure sensor 71a and the second-type pressure sensor 71b are configured to detect pressure against the second friction plate 212.

During braking of the electro-mechanical brake apparatus 100 in this application, the lead screw 41 and the swivel nut 42 cooperate with each other, so that the swivel nut 42 can transmit a braking force to the second friction plate 212 through the brake caliper 30, and the second friction plate 212 slides toward the brake disc 1002 along the axial direction of the lead screw 41. In this case, the second friction plate 212 is simultaneously subject to reverse thrust provided by the separation spring 22, the reset spring, and the brake disc 1002, and the reverse thrust is transmitted to the second-type pressure sensor 71b and the first-type pressure sensor 71a trough the slider 90. In this way, a function of detecting pressure against the second friction plate 212 by the first-type pressure sensor 71a and the second-type pressure sensor 71b is implemented.

It can be understood that the first-type pressure sensor 71a is disposed on a side, away from the second friction plate 212, of the second-type pressure sensor 71b, so that a structure such as the elastic component 80 can be disposed between the first-type pressure sensor 71a and the groove bottom 341 of the first accommodation groove 34, to protect the first-type pressure sensor 71a.

In an embodiment, both the first-type pressure sensor 71a and the second-type pressure sensor 71b are accommodated in the groove 35 of the first caliper body 31. Both an axis of the first-type pressure sensor 71a and an axis of the second-type pressure sensor 71b coincide with the axis of the lead screw 41. Along the axial direction of the lead screw 41, the second friction plate 212, the first friction plate 211, the lead screw 41, the second-type pressure sensor 71b, and the first-type pressure sensor 71a are sequentially arranged. Both the first-type pressure sensor 71a and the second-type pressure sensor 71b are configured to detect pressure against the first friction plate 211.

During braking of the electro-mechanical brake apparatus 100 in this application, the lead screw 41 and the swivel nut 42 cooperate with each other, so that the swivel nut 42 can perform transmission to the first friction plate 211, and the first friction plate 211 slides toward the brake disc 1002 along the axial direction of the lead screw 41. In this case, the first friction plate 211 is simultaneously subject to reverse thrust provided by the separation spring 22 and the brake disc 1002, and the reverse thrust is transmitted to the second-type pressure sensor 71b and the first-type pressure sensor 71a trough the lead screw 41. In this way, a function of detecting pressure against the first friction plate 211 by the first-type pressure sensor 71a and the second-type pressure sensor 71b is implemented.

It can be understood that the first-type pressure sensor 71a is disposed on a side, away from the first friction plate 211, of the second-type pressure sensor 71b, so that a structure such as the elastic component 80 can be disposed between the first-type pressure sensor 71a and the groove bottom 351 of the groove 35, to protect the first-type pressure sensor 71a.

Therefore, based on the descriptions of the foregoing two embodiments, the first-type pressure sensor 71a and the second-type pressure sensor 71b are mounted in a same caliper body, so that the first-type pressure sensor 71a and the second-type pressure sensor 71b can simultaneously detect pressure applied by the friction plate 21 mounted in the same caliper body to the brake disc 1002. In this way, pressure applied to the friction plate 21 during braking can be detected in real time. This avoids a mismatch between a braking force output by the brake motor 50 and pressure applied by the friction plate 21 to the brake disc 1002. This implements a power feedback function of the electro-mechanical brake apparatus 100 in this application, and further ensures reliable braking of the electro-mechanical brake apparatus 100 in this application.

In addition, the first-type pressure sensor 71a and the second-type pressure sensor 71b are mounted in the same caliper body, so that an overall structure of the brake caliper 30 can be more compact. This facilitates miniaturization of the electro-mechanical brake apparatus 100 in this application.

In an embodiment, the electro-mechanical brake apparatus 100 in this application further includes a piston 44, and an axis of the piston 44 coincides with the axis of the lead screw 41. Along the axial direction of the lead screw 41, one end of the piston 44 is configured to abut against the first friction plate 211, and the other end is configured to accommodate a part of the swivel nut 42. To be specific, along the radial direction of the lead screw 41, an end, away from the first friction plate 211, of the piston 44, the swivel nut 42, and the lead screw 41 are sequentially arranged in a sleeved manner. During braking of the electro-mechanical brake apparatus 100 in this application, the swivel nut 42 slides toward the first friction plate 211 under the action of a braking force of the lead screw 41, and the first friction plate 211 is pushed by the piston 44 to slide, so that the first friction plate 211 abuts against the brake disc 1002. In this way, a braking function of the electro-mechanical brake apparatus 100 in this application is implemented.

Clearly, a person skilled in the art can make various modifications and variations to this application without departing from the scope of this application. This application is intended to cover these modifications and variations of this application provided that they fall within the scope of the claims of this application and equivalent technologies thereof.

## Claims

1. An electro-mechanical brake apparatus, wherein the electro-mechanical brake apparatus comprises a brake caliper and a lead screw, the brake caliper is configured to be fastened to a brake motor and accommodate the lead screw, and the lead screw is configured to be connected to the brake motor in a transmission manner and drive two friction plates, wherein
the brake caliper comprises two mounting surfaces, each mounting surface is used for mounting one friction plate, and along an axial direction of the lead screw, a distance between the other mounting surface and the lead screw is greater than a distance between one mounting surface and the lead screw;
the lead screw comprises two end faces, and a distance between one end face and any mounting surface is greater than a distance between the other end face and the any mounting surface; and
at least one of the one end face or the other mounting surface comprises an accommodation groove, each accommodation groove is configured to accommodate a part of a pressure sensor, and each pressure sensor is configured to detect pressure against one friction plate during braking.

2. The electro-mechanical brake apparatus according to claim 1, wherein the one end face comprises one accommodation groove, and the other mounting surface comprises another accommodation groove, wherein
the one accommodation groove on the one end face is configured to accommodate one pressure sensor, and the one pressure sensor is configured to detect pressure against one friction plate during braking;
the another accommodation groove on the other mounting surface is configured to accommodate another pressure sensor, and the another pressure sensor is configured to detect pressure against the other friction plate during braking; and
a measurement scale of the one pressure sensor is greater than a measurement scale of the another pressure sensor.

3. The electro-mechanical brake apparatus according to claim 2, wherein the other mounting surface comprises two accommodation grooves, the two accommodation grooves are respectively configured to accommodate two pressure sensors, and measurement scales of the two pressure sensors are both less than the measurement scale of the one pressure sensor accommodated in the one accommodation groove on the one end face, wherein
along an arrangement direction of the two accommodation grooves on the other mounting surface, a spacing between the two accommodation grooves is greater than an outer diameter of the lead screw and is less than a length of the other friction plate.

4. The electro-mechanical brake apparatus according to any one of claims 1 to 3, wherein the one end face comprises one accommodation groove, and the brake caliper is further configured to accommodate another part of the one pressure sensor, wherein
along a radial direction of the lead screw, an inner diameter of a groove opening of the one accommodation groove is greater than an inner diameter of the one pressure sensor.

5. The electro-mechanical brake apparatus according to claim 4, wherein the one accommodation groove is further configured to accommodate a thrust bearing, and along the axial direction of the lead screw, the thrust bearing is arranged between a groove bottom of the one accommodation groove and the one pressure sensor, wherein
along the radial direction of the lead screw, an inner diameter of the one accommodation groove is greater than an outer diameter of the thrust bearing, and the outer diameter of the thrust bearing is greater than the inner diameter of the one pressure sensor.

6. The electro-mechanical brake apparatus according to claim 5, wherein along the axial direction of the lead screw, a length of the one accommodation groove is less than a sum of a length of the thrust bearing and a length of the one pressure sensor.

7. The electro-mechanical brake apparatus according to any one of claims 4 to 6, wherein the brake caliper is further configured to accommodate a swivel nut, the lead screw is configured to drive the swivel nut to move along the axial direction of the lead screw, and a spiral groove of the lead screw is configured to be meshed with a spiral groove of the swivel nut, wherein
along the axial direction of the lead screw, the length of the one accommodation groove is less than a length of the spiral groove of the lead screw, and a sum of the length of the spiral groove of the lead screw and the length of the one accommodation groove is greater than a length of the lead screw; and
along the radial direction of the lead screw, the outer diameter of the lead screw is greater than an outer diameter of the one pressure sensor.

8. The electro-mechanical brake apparatus according to any one of claims 4 to 7, wherein the electro-mechanical brake apparatus comprises a transmission shaft, and the transmission shaft is configured to receive driving by a motor shaft of the brake motor, wherein
the groove bottom of the one accommodation groove is configured to be fastened to the transmission shaft; or
the groove bottom of the one accommodation groove comprises an inner spline, and the inner spline is configured to be coupled to an outer spline of the transmission shaft.

9. The electro-mechanical brake apparatus according to claim 8, wherein the brake caliper comprises a groove and a through hole, the groove is configured to accommodate the lead screw, the swivel nut, and the one pressure sensor, the through hole penetrates a groove bottom of the groove along the axial direction of the lead screw, and the through hole is configured to allow the transmission shaft to pass, wherein
along the radial direction of the lead screw, a hole diameter of the through hole is greater than or equal to an outer diameter of the transmission shaft and is less than the outer diameter of the one pressure sensor.

10. The electro-mechanical brake apparatus according to claim 9, wherein along the axial direction of the lead screw, one side of the one pressure sensor directly abuts against the groove bottom of the groove, and the other side of the one pressure sensor abuts against the groove bottom of the one accommodation groove through the thrust bearing.

11. The electro-mechanical brake apparatus according to any one of claims 1 to 10, wherein the other mounting surface further comprises another accommodation groove, the another accommodation groove is configured to accommodate another pressure sensor and one end of a slider, and the other end of the slider is configured to fasten the other friction plate, wherein
the another pressure sensor is arranged between the slider and a groove bottom of the another accommodation groove.

12. The electro-mechanical brake apparatus according to claim 11, wherein the groove bottom of the another accommodation groove comprises a protrusion, the protrusion extends from the groove bottom of the another accommodation groove toward a groove opening, and an outer diameter of the protrusion is less than or equal to an inner diameter of the another pressure sensor.

13. The electro-mechanical brake apparatus according to claim 12, wherein the another pressure sensor is sleeved on the protrusion, one side of the another pressure sensor directly abuts against the groove bottom of the another accommodation groove, and the other side of the another pressure sensor directly abuts against the one end of the slider.

14. The electro-mechanical brake apparatus according to claim 12 or 13, wherein a length of the protrusion is less than or equal to a thickness of the another pressure sensor.

15. A vehicle, comprising a wheel, a frame, and the electro-mechanical brake apparatus according to any one of claims 1 to 14, wherein
an axial direction of a lead screw in the electro-mechanical brake apparatus is parallel to an axial direction of the wheel; and
a brake motor in the electro-mechanical brake apparatus is configured to transmit a braking force through the lead screw, to drive two friction plates to move close to or away from each other along the axial direction of the lead screw, to clamp a brake disc of the wheel or release the brake disc.
